# EUROPEAN PATENT APPLICATION

(11) **EP 4 671 337 A1**
(43) Date of publication of application: **31.12.2025**
(21) Application number: 23949016.2
(22) Date of filing: 30.10.2023
(51) Int. Cl.: C09J 133/20

(54) **ADHESION SUBSTANCE, ADHESIVE COMPOSITION, POSITIVE ELECTRODE SHEET, SECONDARY BATTERY, AND ELECTRICAL APPARATUS**

(30) Priority: 15.08.2023 CN 202311027156
(71) Applicant: Contemporary Amperex Technology Co., Limited, Ningde, Fujian 352100 (CN)
(72) Inventor: CHENG, Cong, Ningde, Fujian 352100 (CN); WANG, Xinghui, Ningde, Fujian 352100 (CN); NIU, Wenquan, Ningde, Fujian 352100 (CN)
(74) Representative: Gong, Jinping
(86) International application number: PCT/CN2023/127666
(87) International publication number: WO 2025/035596

(57) **Abstract**

This application provides an adhesion substance, an adhesive composition, a positive electrode plate, a secondary battery, and an electric apparatus. The adhesion substance includes an adhesive, the adhesive including structural unit A, structural unit B, structural unit C, and structural unit D, at least a portion of the structural unit A being crosslinked with at least a portion of the structural unit D; where the structural unit A is formula (1); the structural unit B is independently selected from any one or more of formula (2), formula (3), formula (4), formula (6), or formula (6), optionally, the structural unit B is formula (1) or formula (2); the structural unit C is independently selected from any one of formula (7) or formula (8), m1 and m2 being each independently an integer from 1 to 20, optionally, each m1 being independently an integer from 2 to 12, and each m2 being independently an integer from 8 to 12; and the structural unit D is independently selected from any one or more of formula (9), each n1 being independently an integer from 1 to 20, optionally, n1 being an integer from 1 to 12, further optionally n1 being an integer from 1 to 6.

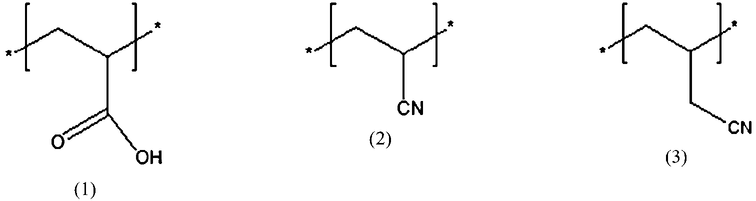

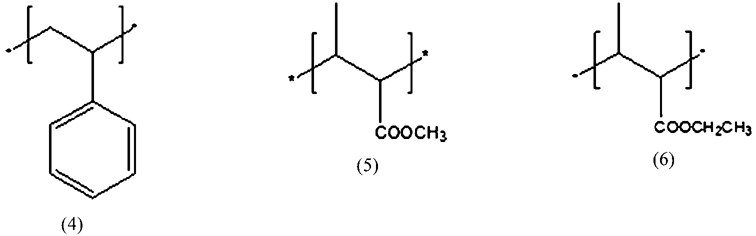

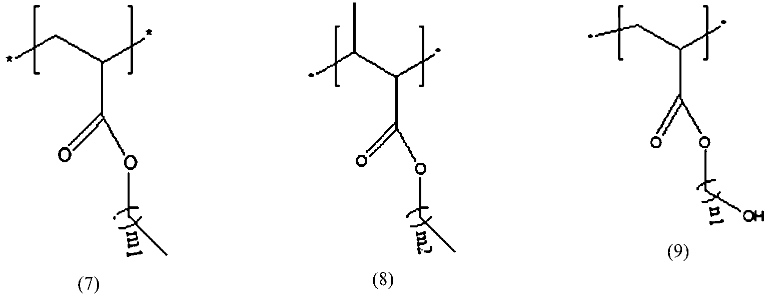

## Description

### CROSS-REFERENCE TO RELATED APPLICATIONS

This application claims priority to Chinese Patent Application No. 202311027156.4, filed on August 15, 2023, entitled "ADHESION SUBSTANCE, ADHESIVE COMPOSITION, POSITIVE ELECTRODE PLATE, SECONDARY BATTERY, AND ELECTRIC APPARATUS," which is incorporated herein by reference in its entirety.

### TECHNICAL FIELD

This application relates to the field of battery technologies, and in particular, to an adhesion substance, an adhesive composition, a positive electrode plate, a secondary battery, and an electric apparatus.

### BACKGROUND

Secondary ion batteries (such as lithium-ion secondary batteries or sodium-ion secondary batteries), as a type of new energy battery, have advantages such as high operating voltage, high specific capacity, long charge-discharge life, and no memory effect. Meanwhile, the safety of secondary ion batteries has increasingly become a focus of attention. In the daily manufacturing process of secondary ion batteries, issues such as zero resistance in short-circuit tests during assembly, low formation voltage, high self-discharge, and large module voltage differences may occur in abnormal cells. Upon disassembling finished batteries, it is found that the separator corresponding to the blank edge of the positive electrode plate has puncture points. Analysis indicates that metal particles generated during laser cutting splash onto the blank area, causing foreign matter to puncture the separator corresponding to the blank area. This may lead to large cell voltage differences in mild cases or short circuits in severe cases, resulting in serious accidents. Additionally, when the cell is encased, bending of the tab may cause the tab root to contact the blank edge of the positive electrode plate, also leading to short-circuit issues.

To address the above issues, providing an insulating adhesive layer at the edge of the positive electrode plate is highly effective in preventing the occurrence of the foregoing short-circuit issues.

### SUMMARY

This application provides an adhesion substance, an adhesive composition, a positive electrode plate, a secondary battery, and an electric apparatus to address the issue of poor wear resistance of the insulating adhesive at the edge of the positive electrode plate.

According to a first aspect of this application, an adhesion substance is provided, including an adhesive, where the adhesive includes structural unit A, structural unit B, structural unit C, and structural unit D, and at least a portion of the structural unit A is crosslinked with at least a portion of the structural unit D, where the structural unit A is 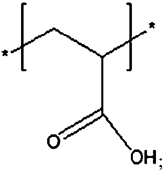 the structural unit B is independently selected from any one or more of 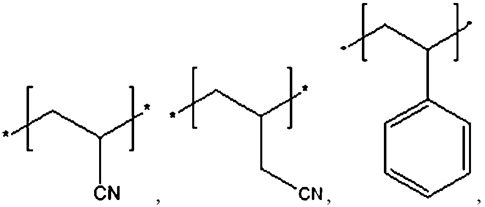 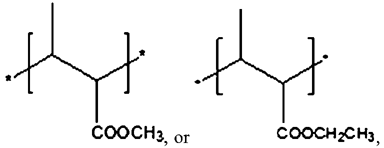 optionally, the structural unit B is 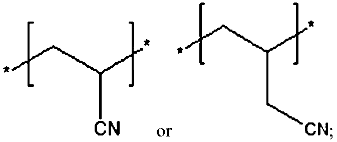 the structural unit C is independently selected from any one of 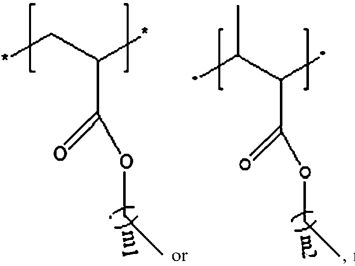 m1 and m2 being each independently an integer from 1 to 20, optionally, each m1 being independently an integer from 2 to 12, and each m2 being independently an integer from 8 to 12; and the structural unit D is independently selected from any one or more of 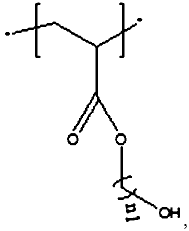 each n1 being independently an integer from 1 to 20, optionally, n1 being an integer from 1 to 12, further optionally, n1 being an integer from 1 to 6.

The structural unit B is provided by an acrylonitrile monomer, where the monomer is a hard monomer that can enhance the strength of an insulating adhesive layer; and the structural unit C is provided by acrylate monomer, where the acrylate is a soft monomer that can improve the flexibility of the insulating adhesive layer and can also enhance the adhesive force of the insulating adhesive layer to a current collector.

The structural unit A and the structural unit D form a three-dimensional crosslinked network through hydrogen bond interactions, enabling the formed insulating adhesive layer to have better wear resistance and to be capable of isolating effective contact and friction between a tab root and an edge of a positive electrode plate caused by bending of a tab during the process of the cell being encased, effectively controlling the problem of short circuits between the tab and a positive electrode film layer. Moreover, the structural units A, C, and D are all polymers of acrylic monomers, where acrylic substances have high temperature resistance and are not easily decomposed. Therefore, the formed insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

In any embodiment of the first aspect of this application, at least a portion of the structural unit A, at least a portion of the structural unit B, at least a portion of the structural unit C, and at least a portion of the structural unit D are chain-linked to form a first chain structure; at least a portion of the structural unit A, at least a portion of the structural unit C, and at least a portion of the structural unit D are chain-linked to form a second chain structure; at least a portion of the structural unit A in the first chain structure is crosslinked with at least a portion of the structural unit D in the second chain structure; and at least a portion of the structural unit D in the first chain structure is crosslinked with at least a portion of the structural unit A in the second chain structure.

The first chain structure and the second chain structure both contain the structural unit A and the structural unit D, which provides more sites for crosslinking between the structural unit A and the structural unit D, thereby further improving the compactness of the formed three-dimensional network and better enhancing the wear resistance of the adhesion substance. The first chain structure simultaneously contains the structural unit A, the structural unit B, the structural unit C, and the structural unit D, which is more conducive to controlling the strength provided by the chain structure by adjusting the contents of the structural unit B and the structural unit C. The second chain structure simultaneously contains the structural unit A, the structural unit C, and the structural unit D, and offers better flexibility, so the second chain structure can be used to more flexibly adjust the content of the structural unit C, and thus more flexibly adjust the adhesive force of the adhesion substance.

In any embodiment of the first aspect of this application, the adhesion substance meets any one or more of the following conditions: (1) the wear resistance of an insulating adhesive layer with a thickness of 3 µm to 7 µm formed by the adhesion substance meets the following requirements: testing using an RCA paper strip wear resistance tester, using a 55 g weight, making a flat tape move along a plane for a distance of 300 mm for 2 cycles to form a test region, taking n test points in the test region with spacings of not less than 2 cm, where a proportion of non-leaking points in the test region is 30% or more, and 5≤n≤100, or an area of non-leaking points in the test region is 60% or more of a total area of the test region; (2) cohesion of the insulating adhesive layer formed by the adhesion substance is 620 N/m to 750 N/m, optionally 660 N/m to 725 N/m; (3) Shore hardness of the insulating adhesive layer formed by the adhesion substance is 45 HA to 80 HA, optionally 50 HA to 65 HA; and (4) adhesive force of the insulating adhesive layer formed by the adhesion substance is 30 N/m to 90 N/m, optionally 40 N/m to 80 N/m.

In any embodiment of the first aspect of this application, in the adhesive, a molar ratio of the structural unit D to the structural unit A is 0.5:1 to 5:1, optionally 0.5:1 to 3:1, further optionally 1:1 to 3:1, optionally, a molar content of the structural unit A is 4% to 50%, optionally 4% to 10%, and a molar content of the structural unit D is 1% to 50%, optionally 5% to 30%, further optionally 5% to 15%. This can improve the wear resistance of the insulating adhesive layer formed by the adhesion substance as much as possible using crosslinking between the structural unit A and the structural unit D.

In any embodiment of the first aspect of this application, in the adhesive, a molar ratio of the structural unit C to the structural unit B is 1:1 to 300:1, optionally 5:1 to 50:1; optionally, a molar content of the structural unit B is 0.2% to 20%, optionally 1% to 5%; and optionally, a molar content of the structural unit C is 1% to 90%, optionally 55% to 90%, further optionally 75% to 80%. By controlling the proportions of the structural unit B and the structural unit C, the adhesive force of the adhesion substance can be improved as much as possible.

In any embodiment of the first aspect of this application, the adhesion substance further includes an insulating filler and/or a dispersant. Carboxyl groups in the adhesion substance can form hydrogen bonds with the insulating filler, thereby improving the adhesion of the formed insulating adhesive layer.

In any embodiment of the first aspect of this application, a weight ratio of the insulating filler, the adhesive, and the dispersant is (70-90):(10-25):0.4. The insulating filler can be used to reduce costs, and the dispersant can not only improve the dispersion effect of the insulating filler in the adhesive, but also avoid interference with the subsequent crosslinking of the adhesive. Moreover, there is enough adhesive to provide good adhesive force.

In any embodiment of the first aspect of this application, the insulating filler includes any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder. These insulating fillers have different hardness, where boehmite has a more moderate hardness, and thus can improve the stability of the insulating adhesive layer without negatively impacting the separator of the battery due to excessive hardness.

In any embodiment of the first aspect of this application, a median particle size by volume Dv50 of the insulating filler is ≤1 µm. Insulating fillers within this particle size range can be fully embedded in an insulating layer of conventional thickness, thereby effectively controlling friction of the insulating filler against the separator.

In any embodiment of the first aspect of this application, the adhesion substance further includes a solvent; optionally, a solid content of the adhesion substance is 20% to 40%; and optionally, the solvent of the adhesion substance includes water; optionally, a viscosity of the adhesion substance measured at 25°C and 12 rpm is 350 mPa·s to 900 mPa·s.

According to a second aspect of this application, an adhesive composition is provided, including an adhesive, where the adhesive includes a first adhesive and a second adhesive, the first adhesive being a polymer and including structural unit A, structural unit B, structural unit C, and structural unit D, and the second adhesive being a polymer and including structural unit A, structural unit C, and structural unit D, where the structural unit A is 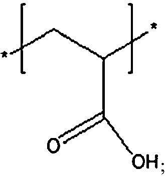 the structural unit B is independently selected from any one or more of 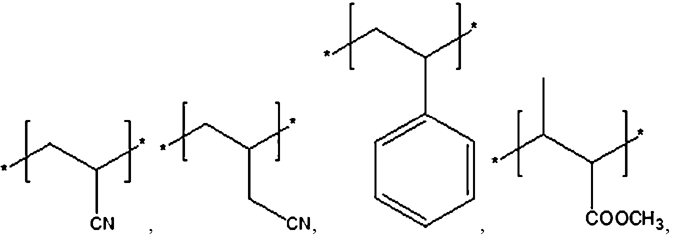 or 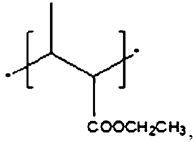 optionally, the structural unit B is 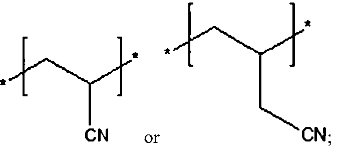 the structural unit C of the first adhesive and the structural unit C of the second adhesive are each independently selected from any one of 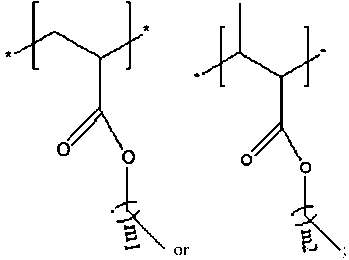 m1 and m2 being each independently an integer from 1 to 20, for example, m1 being 1, 2, 3, 4, 5, 6, 8, 10, 12, 13, 14, 15, 16, 18 or 20, and m1 being 1, 2, 3, 4, 5, 6, 8, 10, 12, 13, 14, 15, 16, 18 or 20, optionally, each m1 being independently an integer from 2 to 12, and each m2 being independently an integer from 8 to 12; and the structural unit D of the first adhesive and the structural unit D of the second adhesive are each independently selected from 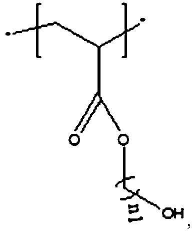 each n1 being independently an integer from 1 to 20, optionally, each n1 being independently an integer from 1 to 12, further optionally, each n1 being independently an integer from 1 to 6.

When the adhesive composition is applied to prepare an insulating adhesive layer for a positive electrode plate, the structural unit B in the first adhesive is provided by an acrylonitrile monomer, where the monomer is a hard monomer that can enhance the strength of the insulating adhesive layer; and the structural units C in the first adhesive and the second adhesive are provided by an acrylate monomer, where acrylate is a soft monomer that can improve the flexibility of the insulating adhesive layer and can also enhance the adhesive force of the insulating adhesive layer to a current collector.

Meanwhile, the structural unit A in the first adhesive and the structural unit D in the second adhesive as well as the structural unit D in the first adhesive and the structural unit A in the second adhesive form a three-dimensional crosslinked network through hydrogen bond interactions, enabling the formed insulating adhesive layer to have better wear resistance and to be capable of isolating effective contact and friction between a tab root and an edge of the positive electrode plate caused by bending of a tab during the process of the cell being encased, effectively controlling the problem of short circuits between the tab and a positive electrode film layer. Moreover, both the first adhesive and the second adhesive of the adhesive composition are polymers of acrylic monomers, where acrylic substances have high temperature resistance and are not easily decomposed. Therefore, the formed insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

In any embodiment of the second aspect, a weight ratio of the first adhesive to the second adhesive is 1:2.5 to 1:20, optionally 1:5 to 1:17.5. The second adhesive is used to provide good adhesive force and flexibility to the insulating adhesive layer, and an appropriate amount of the first adhesive is used to enhance the strength of the insulating adhesive layer, so as to better match the strength of the insulating filler and a positive electrode current collector in the adhesive composition, enabling the adhesive force to be fully exerted. Moreover, by using the above weight ratio, the compactness of the crosslinked network of the insulating adhesive layer is regulated, providing sufficient network support for wear resistance and protection of the current collector.

In any embodiment of the second aspect, the first adhesive meets any one or more of the following conditions: (1) a molar content of the structural unit A in the first adhesive is 5% to 30%; (2) a molar content of the structural unit B in the first adhesive is 5% to 85%; (3) a molar content of the structural unit C in the first adhesive is 5% to 85%; and (4) a molar content of the structural unit D in the first adhesive is 5% to 15%. The contents of the structural unit B and the structural unit C are used to adjust the hardness of the first adhesive so as to meet the hardness requirements of the insulating adhesive layer for different designs and processing methods. The structural unit A and the structural unit D both have relatively low content among all structural units, are mainly used to form a crosslinked network with the second adhesive. Moreover, the self-crosslinking of these two structural units within the first adhesive is also well controlled.

In any embodiment of the second aspect, the second adhesive meets any one or more of the following conditions: (1) a molar content of the structural unit A in the second adhesive is 5% to 10%; (2) a molar content of the structural unit C in the second adhesive is 70% to 85%; and (3) a molar content of the structural unit D in the second adhesive is 5% to 20%. The structural unit C occupies a major proportion in the second adhesive, thereby providing more sufficient flexibility and adhesion to the second adhesive, enhancing the adhesive force of the insulating adhesive layer formed by the adhesive composition to the insulating filler and the positive electrode current collector.

In any embodiment of the second aspect, a weight-average molecular weight of the first adhesive is 500,000 to 1,500,000; further optionally, a difference in weight-average molecular weight between the first adhesive and the second adhesive is 100,000 to 1,500,000. This provides good suspension for the insulating filler, effectively preventing sedimentation of the insulating filler and improving the adhesive force of the insulating adhesive layer.

In any embodiment of the second aspect, the adhesion substance further includes an insulating filler and/or a dispersant. Carboxyl groups of the first adhesive and the second adhesive can form hydrogen bonds with the insulating filler, thereby improving the adhesion of the formed insulating adhesive layer.

In any embodiment of the second aspect of this application, a weight ratio of the insulating filler, the adhesive, and the dispersant is (70-90):(10-25):0.4. The insulating filler can be used to reduce costs, and the dispersant can not only improve the dispersion effect of the insulating filler in the adhesive, but also avoid interference with the subsequent crosslinking of the adhesive. Moreover, there is enough adhesive to provide good adhesive force.

In any embodiment of the second aspect, the insulating filler includes any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder; optionally, a median particle size by volume Dv50 of the insulating filler being ≤1 µm. Insulating fillers within this particle size range can be fully embedded in an insulating layer of conventional thickness, thereby effectively controlling friction of the insulating filler against the separator.

In any embodiment of the second aspect, the dispersant includes one or more of polyacrylate compounds, fatty alcohol polyether compounds, or polyether-modified siloxane compounds.

In any embodiment of the second aspect, the adhesive composition further includes a solvent; optionally, a solid content of the adhesive composition being 20% to 40%; and further optionally, the solvent of the adhesive composition includes water.

According to a third aspect of this application, a positive electrode plate is provided, including: a positive electrode current collector, where at least one side of the positive electrode current collector has a positive electrode film layer region and an uncoated foil region; a positive electrode film layer disposed in the positive electrode film layer region of the positive electrode current collector; and an insulating adhesive layer, disposed in the uncoated foil region of the positive electrode current collector, where the insulating adhesive layer is formed by the adhesion substance according to any one of the first aspect or is cured from the adhesive composition according to any one of the second aspect.

The insulating adhesive layer has better wear resistance, and is capable of isolating effective contact and friction between a tab root and an edge of the positive electrode plate caused by bending of a tab during the process of the cell being encased, effectively controlling the problem of short circuits between the tab and the positive electrode film layer. Moreover, the insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

In any embodiment of the third aspect, a thickness of the insulating adhesive layer is less than or equal to a thickness of the positive electrode film layer, optionally, the thickness of the insulating adhesive layer is 3 µm to 7 µm.

According to a fourth aspect of this application, a preparation method of positive electrode plate is provided and includes a process of disposing a positive electrode film layer and an insulating adhesive layer on at least one side or two sides of a positive electrode current collector, where the process of disposing the insulating adhesive layer includes: mixing constituents of the adhesive composition according to any one of the first aspect to form a glue solution; applying the glue solution onto the uncoated foil region of the positive electrode current collector to obtain a preform with the glue solution; and heating the preform with the glue solution to obtain the insulating adhesive layer, optionally, a heating temperature being 90°C to 120°C to accelerate the removal of the solvent.

In any embodiment of the fourth aspect, the process of mixing constituents of the adhesive composition to form a slurry includes: mixing a dispersant in the adhesive composition with water to form a first dispersion solution, optionally, the mixing being a first stirring, a time of the first stirring being 5 min to 30 min, and a stirring speed being 200 rpm to 400 rpm; mixing the first dispersion solution with an insulating filler in the adhesive composition to form a second dispersion solution, optionally, the mixing being a second stirring, a time of the second stirring being 30 min to 120 min, and a stirring speed being 1200 rpm to 1800 rpm; mixing the second dispersion solution with a first adhesive in the adhesive composition to form a third dispersion solution, optionally, the mixing being a third stirring, a time of the third stirring being 15 min to 60 min, and a stirring speed being 400 rpm to 700 rpm; and mixing the third dispersion solution with a second adhesive in the adhesive composition to form the glue solution, optionally, the mixing being a fourth stirring, a time of the fourth stirring being 5 min to 30 min, and a stirring speed being 200 rpm to 400 rpm.

According to a fifth aspect of this application, a secondary battery is provided and includes a positive electrode plate, where the positive electrode plate includes the positive electrode plate according to any one of the third aspect or the positive electrode plate prepared by the preparation method according to any one of the fourth aspect.

According to a sixth aspect of this application, an electric apparatus is provided and includes a secondary battery, where the secondary battery includes the secondary battery according to any one of the fifth aspect.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a side view of a positive electrode plate according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

The accompanying drawings are not drawn to scale.

Reference signs are described as follows:
10: positive electrode plate; 11: positive electrode current collector; 12: positive electrode film layer; 13: insulating adhesive layer;
1: battery pack; 2: upper box body; 3: lower box body; 4: battery module; 5: secondary battery; 51: housing; 52: electrode assembly; and 53: top cover assembly.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

The following specifically discloses in detail embodiments of the adhesion substance, adhesive composition, positive electrode plate, secondary battery, and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all the steps in this application can be performed sequentially or randomly, preferably, performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive. For example, the terms "include" and "contain" can mean that other unlisted constituents may also be included or contained.

Unless otherwise specified, in this application, the term "or" is inclusive. For example, any one of the following conditions meets the condition "A or B": A is true (or present) and B is false (or not present); A is false (or not present) and B is true (or present); or both A and B are true (or present).

### [Adhesion substance]

During the operation of secondary ion batteries, vibrations are inevitable. With the occurrence of vibrations, the tabs within the cell may also experience relative motion, leading to internal friction. However, the wear resistance of conventional insulating adhesive layers is insufficient, and the relative motion of the tabs may cause coating wear and foil exposure of the electrode plate, resulting in internal short circuits in the cell.

To address the preceding problems, in a first embodiment of this application, an adhesion substance is provided and includes an adhesive, where the adhesive includes structural unit A, structural unit B, structural unit C, and structural unit D, and at least a portion of the structural unit A is crosslinked with at least a portion of the structural unit D, where the structural unit A is 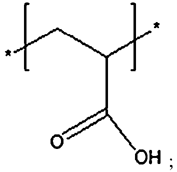 the structural unit B is independently selected from any one or more of 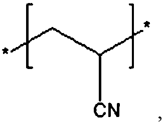 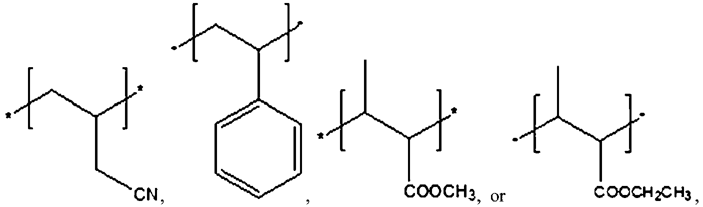 optionally, the structural unit B is 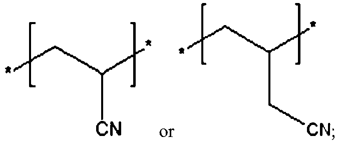 the structural unit C is independently selected from any one of 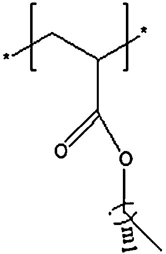 or 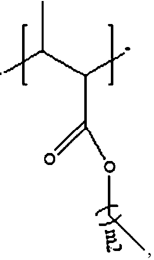 m1 and m2 being each independently an integer from 1 to 20, optionally, each m1 being independently an integer from 2 to 12, and each m2 being independently an integer from 8 to 12; and the structural unit D is independently selected from any one or more of 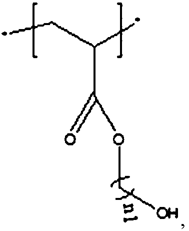 each n1 being independently an integer from 1 to 20, optionally, n1 being an integer from 1 to 12, further optionally, n1 being an integer from 1 to 6.

In the adhesive of the above adhesion substance, the structural unit B is provided by an acrylonitrile monomer, where the monomer is a hard monomer that can enhance the strength of an insulating adhesive layer; and the structural unit C is provided by an acrylate monomer, where the acrylate is a soft monomer that can improve the flexibility of the insulating adhesive layer and can also enhance the adhesive force of the insulating adhesive layer to a current collector.

Meanwhile, the structural unit A and the structural unit D form a three-dimensional crosslinked network through hydrogen bond interactions, enabling the formed insulating adhesive layer to have better wear resistance and to be capable of isolating effective contact and friction between a tab root and an edge of a positive electrode plate caused by bending of a tab during the process of the cell being encased, effectively controlling the problem of short circuits between the tab and a positive electrode film layer. Moreover, the structural units A, C, and D are all polymers of acrylic monomers, where acrylic substances have high temperature resistance and are not easily decomposed. Therefore, the formed insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

In some embodiments, at least a portion of the structural unit A, at least a portion of the structural unit B, at least a portion of the structural unit C, and at least a portion of the structural unit D are chain-linked to form a first chain structure; at least a portion of the structural unit A, at least a portion of the structural unit C, and at least a portion of the structural unit D are chain-linked to form a second chain structure; at least a portion of the structural unit A in the first chain structure is crosslinked with at least a portion of the structural unit D in the second chain structure; and at least a portion of the structural unit D in the first chain structure is crosslinked with at least a portion of the structural unit A in the second chain structure.

The first chain structure and the second chain structure both contain the structural unit A and the structural unit D, which provides more sites for crosslinking between the structural unit A and the structural unit D, thereby further improving the compactness of the formed three-dimensional network and better enhancing the wear resistance of the adhesion substance. The first chain structure simultaneously contains the structural unit A, the structural unit B, the structural unit C, and the structural unit D, which is more conducive to controlling the strength provided by the chain structure by adjusting the contents of the structural unit B and the structural unit C. The second chain structure simultaneously contains the structural unit A, the structural unit C, and the structural unit D, and offers better flexibility, so the second chain structure can be used to more flexibly adjust the content of the structural unit C, and thus more flexibly adjust the adhesive force of the adhesion substance.

In some embodiments of this application, the adhesion substance meets any one or more of the following conditions: (1) the wear resistance of an insulating adhesive layer with a thickness of 5 µm formed by the adhesion substance meets the following requirements: testing using an RCA paper strip wear resistance tester, using a 55 g weight, making a flat tape move along a plane for a distance of 300 mm for 2 cycles to form a test region, taking n test points in the test region with spacings of not less than 2 cm, where a proportion of non-leaking points in the test region is 30% or more, and 5≤n≤100, or an area of non-leaking points in the test region is 60% or more of a total area of the test region; (2) cohesion of the insulating adhesive layer formed by the adhesion substance is 620 N/m to 750 N/m, optionally 660 N/m to 725 N/m; (3) Shore hardness of the insulating adhesive layer formed by the adhesion substance is 45 HA to 80 HA, optionally 50 HA to 65 HA; and (4) adhesive force of the insulating adhesive layer formed by the adhesion substance is 30 N/m to 90 N/m, optionally 40 N/m to 80 N/m.

The test method for the foregoing cohesion is as follows:
A slurry is prepared from the adhesion substance and applied onto a carbon-coated layer of a carbon-coated copper foil, followed by drying to obtain a sample piece, one side of the sample piece being a copper foil surface and the other side being an adhesive layer formed by the adhesion substance; the sample piece is then cut into strips with a width of 2 cm and a length of 6 cm; the copper foil surface of the strip is bonded to a surface of a hard substrate (steel plate) using 3M-55230H double-sided tape (ensuring no bubbles during bonding). The adhesive layer surface of the fixed strip is bonded with 3M-55230H double-sided tape, and a copper foil of the same size as the double-sided tape is covered on the surface of the double-sided tape (ensuring no bubbles during bonding), with the double-sided tape used in two bonding processes being of the same size, to obtain a test sample.

The copper foil and double-sided tape at the first end of the test sample are manually peeled in a 180° direction for a certain distance, and extend backward beyond the end (that is, a second end) opposite the first end of the entire test sample by 1 cm. One end of a tensile testing machine is used to fix the first end (hard substrate, carbon-coated copper foil, adhesive layer); and the other end of the tensile testing machine is used to fix the second end.

A stretching speed of the tensile testing machine is set to 50 mm/min, a stretching length is set to 100 mm, and then the test is conducted. The peel force data obtained during the test is the cohesion of a coating material.

The test method for the foregoing hardness is as follows: A Shore type-A hardness tester is used to test the hardness of the surface of the insulating adhesive layer.

The test method for the foregoing adhesive force is as follows:

### Specifically:

A positive electrode plate to be tested is taken, with the appearance of the positive electrode plate being intact and free of defects. A sample with an insulating adhesive layer is cut from the positive electrode plate using a blade, with a width of 20 mm and a length of 100 mm to 160 mm. A special double-sided tape NITTO.NO5000NS is attached to a steel plate, with a tape width of 10 mm and a tape length of 90 mm to 150 mm; a paper strip with the same width as the sample and a length of 80 mm to 200 mm longer than the sample is fixed on the double-sided tape, and crepe tape is placed on the paper strip; the cut sample of fixed size is attached to the crepe tape with the insulating adhesive layer facing downward, and a 3 kg pressure roller is used to roll the sample surface in the same direction three times to obtain a test sample. The test sample is fixed on a testing machine, with the end of the steel plate not attached to the electrode plate fixed by a lower clamp and the paper strip folded upward and fixed by an upper clamp, ensuring the sample axis direction is consistent with the force application direction. The testing machine is loaded at a peeling speed of 10 mm/min until the sample fractures, and then the test is stopped. The maximum load force is recorded as F (in N). The sample width is L=20 mm, and the peel strength f1 (in N/m) is calculated according to f1=F/L. The peel strength is the adhesive force.

In some embodiments of this application, in the adhesive, a molar ratio of the structural unit D to the structural unit A is 0.5:1 to 5:1, for example, 0.5:1, 1:1, 1.1:1, 2:1, 2.1:1, 2.2:1, 2.5:1, 2.7:1, 2.8:1, 2.9:1, 3:1, 3.2:1, 3.5:1, 3.8:1, 4:1, 4.5:1, or 5:1, optionally 0.5:1 to 3:1, further optionally 1:1 to 3:1; optionally, a molar content of the structural unit A is 4% to 50%, for example, 4%, 4.5%, 4.8%, 5%, 5.3%, 5.5%, 6%, 6.2%, 6.4%, 6.8%, 7%, 10%, 15%, 20%, 30%, 40%, or 50%, optionally 4% to 10%; and a molar content of structural unit D is 1% to 50%, for example, 1%, 4%, 5%, 6%, 8%, 10%, 13%, 14%, 15%, 20%, 30%, 40%, or 50%, optionally 5% to 30%, further optionally 5% to 15%. This can improve the wear resistance of the insulating adhesive layer formed by the adhesion substance as much as possible using crosslinking between the structural unit A and the structural unit D.

In some embodiments of this application, in the adhesive, a molar ratio of the structural unit C to the structural unit B is 1:1 to 300:1, for example, 1:1, 5:1, 10:1, 15:1, 20:1, 25:1, 30:1, 35:1, 40:1, 45:1, 50:1, 60:1, 100:1, 150:1, 200:1, 250:1, 280:1, 290:1, or 300:1, optionally 5:1 to 50:1; a molar content of structural unit B was 0.2% to 20%, for example, 0.2%, 0.25%, 0.5%, 1%, 1.5%, 2%, 2.1%, 2.5%, 3%, 3.5%, 5%, 10%, 11%, 13%, 15%, or 20%, optionally 1% to 5%; and optionally, a molar content of structural unit C is 1% to 90%, for example, 5%, 10%, 20%, 30%, 40%, 45%, 50%, 55%, 58%, 60%, 68%, 70%, 75%, 77%, 78%, 80%, 85%, or 90%, optionally 55% to 90%, further optionally 75% to 80%. By controlling the proportions of the structural unit B and the structural unit C, the adhesive force of the adhesion substance can be improved as much as possible.

In some embodiments of this application, the adhesion substance further includes an insulating filler and/or a dispersant. The use of the insulating filler reduces costs, and the dispersant promotes the dispersion effect of the insulating filler in the adhesive; moreover, carboxyl groups of the structural unit A can form hydrogen bonds with the insulating filler, thereby improving the adhesion of the formed insulating adhesive layer.

In some embodiments of this application, a ratio of the insulating filler, adhesive, and dispersant may refer to the compositions of conventional adhesion substances. In some embodiments, a weight ratio of the insulating filler, the adhesive, and the dispersant is (70-90):(10-25):0.4. The insulating filler can be used to reduce costs, and the dispersant can not only improve the dispersion effect of the insulating filler in the adhesive, but also avoid interference with the subsequent crosslinking of the adhesive. Moreover, there is enough adhesive to provide good adhesive force.

The insulating filler may be a commonly used insulating filler in adhesives. Considering that the adhesive composition is applied to a positive electrode plate and needs to withstand laser radiation subsequently, the insulating filler may be selected from inorganic materials that do not soften or melt at temperatures above 600°C, typically above 700°C, for example, above 900°C, and that can insulate the positive and negative electrodes and have heat resistance and electrochemical stability.

In some embodiments, the insulating filler includes any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder. These insulating fillers have different hardness, where boehmite has a more moderate hardness, and thus can improve the stability of the insulating adhesive layer without negatively impacting the separator of the battery due to excessive hardness.

In some embodiments, to further improve the dispersion effect of the insulating filler in the adhesive while avoiding the impact of excessively large filler particle sizes on the separator, optionally, a particle size Dv50 of the insulating filler is ≤1 µm. Insulating fillers within this particle size range can be fully embedded in an insulating layer of conventional thickness, thereby effectively controlling friction of the insulating filler against the separator. The above Dv50 represents a median particle size by volume, which is a particle size corresponding to a cumulative volume distribution percentage of 50%. The test method of the particle size can refer to the standard GB/T 19077-2016, and a laser particle size analyzer (for example, Malvern Master Size 3000) is used for measurement.

The dispersant used for the adhesion substance of this application may be selected from conventional dispersants that facilitate the dispersion of insulating fillers. In some embodiments, the dispersant includes one or more of polyacrylate compounds, fatty alcohol polyether compounds, or polyether-modified siloxane compounds, for example, Chemadd-6004 from Yueyang Kaimen Water-Based Additives Co., Ltd., or Elaecpure LW-10 from Dow Chemical Company. When no solvent is included, the packaging and transportation of the adhesion substance are more convenient; and when a solvent is included, the use of the adhesion substance is more convenient. Different solid contents result in different viscosities of the adhesion substance, affecting coating applicability and curing conditions. Those skilled in the art can select the solid content based on construction requirements. In some embodiments, optionally, a solid content of the adhesion substance is 20% to 40% so as to improve construction and curing efficiency. Optionally, a viscosity of the adhesion substance measured at 25°C and 12 rpm is 550 mPa·s.

In some embodiments, to save costs and improve the safety of the operating environment, further optionally, the solvent of the adhesion substance includes water, providing a water-based adhesive.

### [Adhesive composition]

In a second embodiment of this application, an adhesive composition is provided and includes an adhesive, where the adhesive includes a first adhesive and a second adhesive, the first adhesive being a polymer including structural unit A, structural unit B, structural unit C, and structural unit D, and the second adhesive being a polymer including structural unit A, structural unit C, and structural unit D,
where the structural unit A is 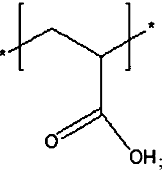
the structural unit B is independently selected from any one or more of 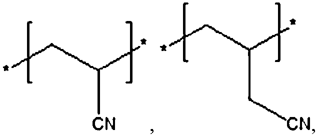 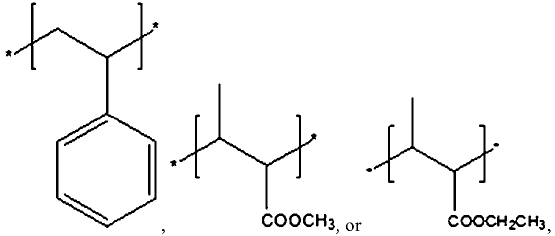 optionally, the structural unit B is 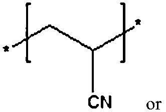 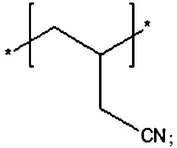 the structural unit C of the first adhesive and the structural unit C of the second adhesive are each independently selected from any one of 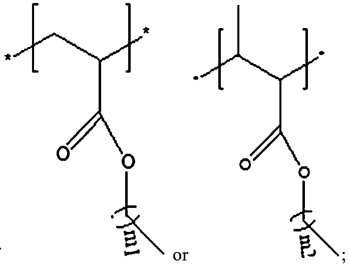 m1 and m2 being each independently an integer from 1 to 20, for example, m1 being 1, 2, 3, 4, 5, 6, 8, 10, 12, 13, 14, 15, 16, 18, or 20, and m1 being 1, 2, 3, 4, 5, 6, 8, 10, 12, 13, 14, 15, 16, 18, or 20; optionally, each m1 being independently an integer from 2 to 12, and each m2 being independently an integer from 8 to 12; and the structural unit D of the first adhesive and the structural unit D of the second adhesive are each independently selected from 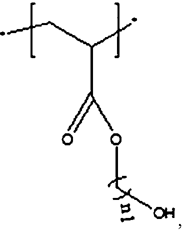 each n1 being independently an integer from 1 to 20, for example, n1 being 1, 2, 3, 4, 5, 6, 8, 10, 12, 13, 14, 15, 16, 18, or 20, optionally, each n1 being independently an integer from 1 to 12; further optionally, each n1 being independently an integer from 1 to 6.

When the adhesive composition is applied to prepare an insulating adhesive layer for a positive electrode plate, the structural unit B in the first adhesive was provided by an acrylonitrile monomer, where the monomer is a hard monomer that can enhance the strength of the insulating adhesive layer; and the structural units C in the first adhesive and the second adhesive are provided by an acrylate monomer, where acrylate is a soft monomer that can improve the flexibility of the insulating adhesive layer and can also enhance the adhesive force of the insulating adhesive layer to a current collector.

Meanwhile, the structural unit A in the first adhesive and the structural unit D in the second adhesive as well as the structural unit D in the first adhesive and the structural unit A in the second adhesive form a three-dimensional crosslinked network through hydrogen bond interactions, enabling the formed insulating adhesive layer to have better wear resistance and to be capable of isolating effective contact and friction between a tab root and an edge of a positive electrode plate caused by bending of a tab during the process of the cell being encased, effectively controlling the problem of short circuits between the tab and a positive electrode film layer. Moreover, both the first adhesive and the second adhesive of the adhesive composition are polymers of acrylic monomers, where acrylic substances have high temperature resistance and are not easily decomposed. Therefore, the formed insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

In some embodiments of this application, to further improve the comprehensive performance of the insulating adhesive layer formed by the adhesive composition, a weight ratio of the first adhesive to the second adhesive is selected to be 1:2.5 to 1:20, for example, 1:17.5, 2:17.5, 4:17.5, 1:5, 2:12.5, 2:15, or 1:10, optionally 1:5 to 1:17.5. An amount of the second adhesive is relatively larger than that of the first adhesive. The first adhesive is used to provide good adhesive force and flexibility to the insulating adhesive layer, and an appropriate amount of the second adhesive is used to enhance the strength of the insulating adhesive layer, so as to better match the strength of the insulating filler and the positive electrode current collector in the adhesive composition, enabling the adhesive force to be fully exerted. Moreover, by using the above weight ratio, the compactness of the crosslinked network of the insulating adhesive layer is regulated, providing sufficient network support for wear resistance and protection of the current collector.

Both the first adhesive and the second adhesive in the adhesive composition of this application can be polymerized from acrylic monomers and acrylic derivative monomers corresponding to the above structural units. Different contents of the structural units result in different properties of the adhesive. To adjust the properties of adhesives and enable better synergy between two adhesives, in some embodiments of this application, the first adhesive is a copolymer, optionally the first adhesive meets any one or more of the following conditions: (1) a molar content of the structural unit A in the first adhesive is 5% to 30%; (2) a molar content of the structural unit B in the first adhesive is 5% to 85%, optionally 5% to 55%; (3) a molar content of the structural unit C in the first adhesive is 5% to 85%, optionally 35% to 85%; and (4) a molar content of the structural unit D in the first adhesive is 5% to 15%. The contents of the structural unit B and the structural unit C are used to adjust the hardness of the first adhesive so as to meet the hardness requirements of the insulating adhesive layer for different designs and processing methods. The structural unit A and the structural unit D both have relatively low content among all structural units, are mainly used to form a crosslinked network with the second adhesive. Moreover, the self-crosslinking of these two structural units within the first adhesive is also well controlled.

In some embodiments of this application, the second adhesive is a copolymer, optionally the second adhesive meets any one or more of the following conditions: (1) a molar content of the structural unit A in the second adhesive is 5% to 10%; (2) a molar content of the structural unit C in the second adhesive is 70% to 85%; and (3) a molar content of the structural unit D in the second adhesive is 5% to 20%. The structural unit C occupies a major proportion in the second adhesive, thereby providing more sufficient flexibility and adhesion to the second adhesive, enhancing the adhesive force of the insulating adhesive layer formed by the adhesive composition to the insulating filler and the positive electrode current collector.

The adhesion targets of the first adhesive and the second adhesive in the adhesive composition of this application are the insulating filler and the substrate. Due to gravity, the insulating filler may settle in a glue solution formed by the adhesive composition. Severe sedimentation can affect the adhesive force of the insulating adhesive layer to the substrate. In some embodiments of this application, a weight-average molecular weight of the first adhesive is 500,000 to 1,500,000; the first adhesive with the above weight-average molecular weight has a higher viscosity, providing good suspension for the insulating filler, effectively preventing sedimentation of the insulating filler and improving the adhesive force of the insulating adhesive layer.

The second adhesive has better flexibility and flowability, with a less effective suspension effect on the insulating filler compared to the first adhesive. However, the second adhesive also has the characteristics of conventional polymers, meaning that its viscosity increases with increasing molecular weight. In some embodiments, the second adhesive still provides sufficient flowability to the glue solution formed by the adhesive composition for ease of application. Further optionally, a difference in weight-average molecular weight between the first adhesive and the second adhesive is 0 to 1,500,000. The above difference may be a difference when the weight-average molecular weight of the first adhesive is greater than that of the second adhesive or when the weight-average molecular weight of the first adhesive is less than that of the second adhesive.

In some embodiments, the adhesion substance further includes an insulating filler and/or a dispersant. The use of the insulating filler in the adhesive composition of this application reduces the cost of the composition, and the dispersant promotes the dispersion effect of the insulating filler in the adhesive. Additionally, carboxyl groups can form hydrogen bonds with the insulating filler, thereby improving the adhesion of the formed insulating adhesive layer.

A ratio of the insulating filler, the adhesive, and the dispersant may refer to the composition of conventional adhesive compositions. In some embodiments, a weight ratio of the insulating filler, the adhesive, and the dispersant is (70-90):(10-25):0.4. The insulating filler can be used to reduce costs, and the dispersant can not only improve the dispersion effect of the insulating filler in the adhesive, but also avoid interference with the subsequent crosslinking of the adhesive. Moreover, there is enough adhesive to provide good adhesive force.

The insulating filler may be a commonly used insulating filler in adhesives. Considering that the adhesive composition is applied to a positive electrode plate and needs to withstand laser radiation subsequently, the insulating filler may be selected from inorganic materials that do not soften or melt at temperatures above 600°C, typically above 700°C, for example, above 900°C, and that can insulate the positive and negative electrodes and have heat resistance and electrochemical stability.

In some embodiments, the insulating filler includes any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder. The hardness of the above insulating fillers varied, with boehmite having a more moderate hardness, which could improve the stability of the insulating adhesive layer without negatively impacting the battery separator due to excessive hardness.

In some embodiments, to further improve the dispersion effect of the insulating filler in the adhesive while avoiding the impact of excessively large filler particle sizes on the separator, optionally, a particle size Dv50 of the insulating filler is ≤1 µm. Insulating fillers within this particle size range can be fully embedded in an insulating layer of conventional thickness, thereby effectively controlling friction of the insulating filler against the separator.

The dispersant used for the adhesive composition of this application may be selected from conventional dispersants that facilitate the dispersion of insulating fillers. In some embodiments, the dispersant includes one or more of polyacrylate compounds, fatty alcohol polyether compounds, or polyether-modified siloxane compounds, for example, Chemadd-6004 from Yueyang Kaimen Water-Based Additives Co., Ltd., or Elaecpure LW-10 from Dow Chemical Company.

In some embodiments, the adhesive composition further includes a solvent; when no solvent is included, the packaging and transportation of the adhesive composition are more convenient; and when a solvent is included, the use of the adhesive composition is more convenient. Different solid contents result in different viscosities of the adhesive composition, affecting coating applicability and curing conditions. Those skilled in the art can select the solid content based on construction requirements. In some embodiments, optionally, a solid content of the adhesive composition is 20% to 40% so as to improve construction and curing efficiency. In some embodiments, to save costs and improve the safety of the operating environment, further optionally, the solvent of the adhesive composition includes water, providing a water-based adhesive.

In some embodiments, the wear resistance, cohesion, hardness, and adhesive force of the adhesive composition also meet the requirements of the adhesion substance described above, and are not repeated herein.

Both the first adhesive and the second adhesive used in the adhesive composition of this application can be prepared by referring to preparation methods in the prior art or using known materials. To facilitate implementation by those skilled in the art, the following preparation methods are provided for reference.

First adhesive: At 10°C to 30°C, a surfactant is dissolved in water, and monomer A CH₂=CHCOOH, monomer B CH₂=CHCN, monomer C CH₂=CHCOO(CH₂)ₘ₁CH₃, and monomer D CH₂=CHCOO(CH₂)ₙ₁OH, and a chain transfer agent (for example, n-dodecyl mercaptan) are sequentially added, blended evenly, during which nitrogen is introduced for deoxygenation protection, to form a pre-emulsion. The pre-emulsion is heated to 80°C to 90°C to obtain the pre-emulsion. A surfactant (for example, dialkyl sulfosuccinate salt M-30S) is dissolved in deionized water, and the resulting mixed solution is added to a reactor, stirred, protected with nitrogen deoxygenation, and heated to 80°C to 90°C to obtain a reactive surfactant solution. An ammonium persulfate solution is prepared with deionized water as a first initiator solution. The pre-emulsion and the first initiator solution are simultaneously and continuously added dropwise to the reactive surfactant solution in the reactor. After the addition is complete, the mixture is kept warm to obtain an acrylic (ester) copolymer seed solution. An ammonium persulfate solution is prepared with deionized water as a second initiator solution, with a concentration of the second initiator solution being greater than that of the first initiator solution. The second initiator solution is added dropwise to the acrylic (ester) copolymer seed solution, with continuous addition for 100 min to 150 min. After the addition is complete, the mixture is kept warm for 1 h to 3 h to obtain an acrylic (ester) copolymer solution. The acrylic (ester) copolymer solution in the reactor is cooled to 60°C to 70°C, naturally cooled to room temperature, subjected to vacuum degassing, with the vacuum degree in the reactor below 0.09 MPa, maintained for 10 min to 50 min, then vented to atmospheric pressure, and filtered to obtain an aqueous adhesive emulsion. The pH value is then adjusted to 7 to 8.

Second adhesive: At 10°C to 30°C, a surfactant is dissolved in water, and monomer A CH₂=CHCOOH, monomer C CH₂=CHCOO(CH₂)ₘ₁CH₃, monomer D CH₂=CHCOO(CH₂)ₙ₁OH, and a chain transfer agent (for example, n-dodecyl mercaptan) are sequentially added, blended evenly, during which nitrogen is introduced for deoxygenation protection, to form a pre-emulsion. The pre-emulsion is heated to 80°C to 90°C to obtain the pre-emulsion. A surfactant (for example, dialkyl sulfosuccinate salt M-30S) is dissolved in deionized water, and the resulting mixed solution is added to a reactor, stirred, protected with nitrogen deoxygenation, and heated to 80°C to 90°C to obtain a reactive surfactant solution. An ammonium persulfate solution is prepared with deionized water as a first initiator solution. The pre-emulsion and the first initiator solution are simultaneously and continuously added dropwise to the reactive surfactant solution in the reactor. After the addition is complete, the mixture is kept warm to obtain an acrylic (ester) copolymer seed solution. An ammonium persulfate solution is prepared with deionized water as a second initiator solution, with a concentration of the second initiator solution being greater than that of the first initiator solution. The second initiator solution is added dropwise to the acrylic (ester) copolymer seed solution, with continuous addition for 100 min to 150 min. After the addition is complete, the mixture is kept warm for 1 h to 3 h to obtain an acrylic (ester) copolymer solution. The acrylic (ester) copolymer solution in the reactor is cooled to 60°C to 70°C, naturally cooled to room temperature, subjected to vacuum degassing, with the vacuum degree in the reactor below 0.09 MPa, maintained for 10 min to 50 min, then vented to atmospheric pressure, and filtered to obtain an aqueous adhesive emulsion. The pH value is then adjusted to 7 to 8.

### [Secondary Battery]

Secondary batteries, also referred to as rechargeable batteries or storage batteries, are batteries whose active material can be activated for continuous use through charging after the batteries are discharged.

Usually, the secondary battery includes a positive electrode plate, a negative electrode plate, a separator, and an electrolyte. During charging and discharging of the battery, active ions (such as lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

The foregoing adhesive composition may be considered for use in positions requiring adhesives in secondary batteries or as a raw material for separators. In some embodiments, it is applied to the positive electrode plate.

### [Positive electrode plate]

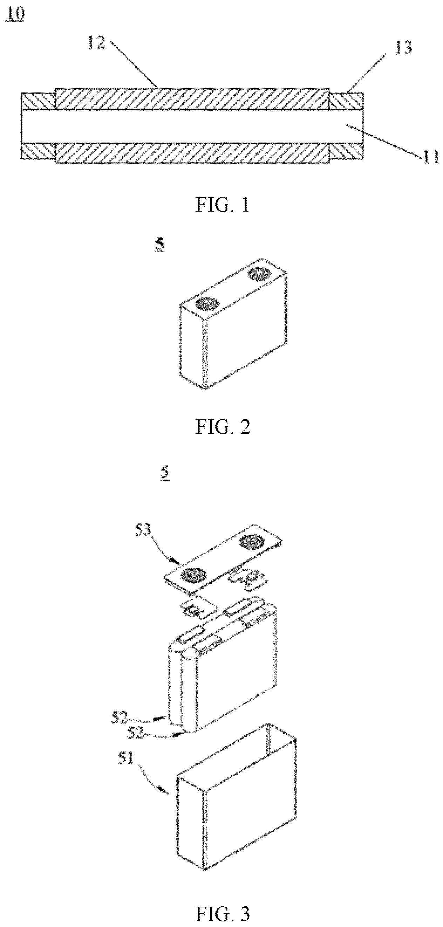

As shown in FIG. 1, a positive electrode plate 10 typically includes a positive electrode current collector 11 and a positive electrode film layer 12 provided on at least one side surface of the positive electrode current collector 11, where the positive electrode film layer 12 includes a positive electrode active material.

For example, the positive electrode current collector 11 includes two opposite surfaces in its thickness direction, and the positive electrode film layer 12 is disposed on either or both of the two opposite surfaces of the positive electrode current collector 11.

As shown in FIG. 1, in addition to the positive electrode film layer 12, the positive electrode current collector 11 also has an uncoated foil region around the periphery of the positive electrode film layer 12. In some embodiments of this application, the positive electrode plate 10 further includes an insulating adhesive layer 13 disposed in the uncoated foil region of the positive electrode current collector 11, where the insulating adhesive layer 13 is cured from the adhesive composition provided in any of the foregoing embodiments. The specific placement of the insulating adhesive layer 13 in the uncoated foil region may refer to the prior art, for example, avoiding the tab root.

The insulating adhesive layer 13 in the positive electrode plate 10 is cured from the adhesive composition of this application. The structural unit A in the first adhesive and the structural unit D in the second adhesive as well as the structural unit D in the first adhesive and the structural unit A in the second adhesive form a three-dimensional crosslinked network through hydrogen bond interactions, enabling the insulating adhesive layer to have better wear resistance and to be capable of isolating effective contact and friction between a tab root and an edge of the positive electrode plate caused by bending of a tab during the process of the cell being encased, effectively controlling the problem of short circuits between the tab and the positive electrode film layer. Moreover, both the first adhesive and the second adhesive of the adhesive composition are polymers of acrylic monomers, where acrylic substances have high temperature resistance and are not easily decomposed. Therefore, the insulating adhesive layer can prevent the current collector of the positive electrode plate from being directly subjected to laser cutting, effectively resisting the splashing of metal particles. Furthermore, laser cutting in the insulating adhesive layer is less likely to produce metal bead particles, effectively mitigating the problem of metal particle splashes puncturing a separator due to direct laser cutting of the current collector. Meanwhile, the three-dimensional crosslinked network further enhances the resistance to laser cutting, better achieving protection of the separator.

Additionally, carboxyl groups of the first adhesive and the second adhesive can form hydrogen bonds with the insulating filler, thereby improving the adhesion of the insulating adhesive layer, the structural unit B in the first adhesive is provided by an acrylonitrile monomer, where the monomer is a hard monomer that can enhance the strength of the insulating adhesive layer; and the structural unit C in the first adhesive and the second adhesive is provided by an acrylate monomer, where the acrylate is a soft monomer that can improve the flexibility of the insulating adhesive layer and can also enhance the adhesive force of the insulating adhesive layer to the current collector.

A thickness of the insulating adhesive layer 13 of the positive electrode plate 10 may refer to the conventional thickness of insulating adhesive layers or be set according to battery design requirements. In some embodiments, a thickness of the insulating adhesive layer 13 is less than or equal to a thickness of the positive electrode film layer 12, optionally, the thickness of the insulating adhesive layer 13 is 3 µm to 7 µm. This can achieve the protective effect on the positive electrode current collector 11 while avoiding an increase in cell volume due to an excessively thick insulating adhesive layer 12.

The formation process of the insulating adhesive layer may refer to conventional techniques, such as coating. In some embodiments, the process of forming the insulating adhesive layer includes: mixing the adhesive composition to form a glue solution; applying the glue solution onto the uncoated foil region of the positive electrode current collector to obtain a preform with the glue solution; and heating the preform with the glue solution to obtain the insulating adhesive layer, optionally, a heating temperature being 90°C to 120°C to accelerate the removal of the solvent.

In some embodiments, to improve the uniformity of mixing of the constituents in the adhesive composition, the process of mixing the adhesive composition to form a slurry includes:
mixing a dispersant in the adhesive composition with water to form a first dispersion solution, optionally, the mixing being a first stirring, a time of the first stirring being 5 min to 30 min, and a stirring speed being 200 rpm to 400 rpm;
mixing the first dispersion solution with the insulating filler in the adhesive composition to form a second dispersion solution, optionally, the mixing being a second stirring, a time of the second stirring being 30 min to 120 min, and a stirring speed being 1200 rpm to 1800 rpm;
mixing the second dispersion solution with a first adhesive in the adhesive composition to form a third dispersion solution, optionally, the mixing being a third stirring, a time of the third stirring being 15 min to 60 min, and a stirring speed being 400 rpm to 700 rpm; and
mixing the third dispersion solution with a second adhesive in the adhesive composition to form the glue solution, optionally, the mixing being a fourth stirring, a time of the fourth stirring being 5 min to 30 min, and a stirring speed being 200 rpm to 400 rpm.

In the foregoing processes, the stirring time and speed are adjusted according to the objects being mixed, and stirring is used to improve the mixing effect of the constituents.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, when the secondary battery is a lithium-ion secondary battery, the positive electrode active material may include at least one of the following materials: olivine-structured lithium-containing phosphate, lithium transition metal oxide, and respective modified compounds thereof. However, this application is not limited to these materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

When the secondary battery is a sodium-ion secondary battery, as an example, the positive electrode active material of the sodium-ion secondary battery may include at least one of the following materials: sodium transition metal oxides, polyanionic compounds, and Prussian blue compounds. However, this application is not limited to these materials, and other conventionally well known materials that can be used as a positive active material for a sodium-ion battery may also be used.

In an optional technical solution of this application, in the sodium transition metal oxide, the transition metal may be at least one of Mn, Fe, Ni, Co, Cr, Cu, Ti, Zn, V, Zr, and Ce. The transition metal oxide is, for example, NaₓMO₂, where M is one or more of Ti, V, Mn, Co, Ni, Fe, Cr, and Cu, and 0<x≤1.

In an optional technical solution of this application, the polyanionic compound may be a compound with sodium ions, transition metal ions, and tetrahedral (YO₄)ⁿ⁻ anionic units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may alternatively be a compound with sodium ions, transition metal ions, tetrahedral (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si; n represents the valence state of (YO₄)ⁿ⁻; and the halogen may be at least one of F, Cl, and Br.

The polyanionic compound may alternatively be a class of compounds having sodium ions, tetrahedral (YO₄)ⁿ⁻anionic units, polyhedral units (ZO_{y})^{m+}, and optional halogen anions. Y may be at least one of P, S, and Si; n represents the valence state of (YO₄)ⁿ⁻; Z represents a transition metal, and may be at least one of Mn, Fe, Ni, Co, Cr, Cu, Ti, Zn, V, Zr, and Ce; m represents the valence state of (ZO_{y})^{m+}; and the halogen may be at least one of F, Cl, and Br.

The polyanionic compound is, for example, at least one of NaFePO₄, Na₃V₂(PO₄)₃ (sodium vanadium triphosphate, NVP for short), Na₄Fe₃(PO₄)₂(P₂O₇), NaM'PO₄F (M' is one or more of V, Fe, Mn, and Ni), and Na₃(VO_{y})₂(PO₄)₂F_{3-2y} (0≤y≤1).

The Prussian blue compound may be a compound with sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are independently at least one of Ni, Cu, Fe, Mn, Co, and Zn, and 0<a≤2, 0<b<1, 0<c<1.

In some embodiments, the positive electrode film layer further optionally includes an adhesive. For example, the adhesive may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: dispersing constituents used for preparing a positive electrode plate, for example, a positive electrode active material, a conductive agent, an adhesive, and any other constituent, in a solvent (for example, N-methylpyrrolidone) to prepare a positive electrode slurry; and applying the positive electrode slurry onto a positive electrode current collector, followed by processes such as drying and cold pressing to obtain a positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. In an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and may alternatively use other conventional well-known materials that can be used as negative electrode active materials for batteries. One of these negative electrode active materials may be used alone, or two or more of them may be used in combination.

In some embodiments, the negative electrode film layer further optionally includes an adhesive. For example, the adhesive may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the negative electrode film layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the adhesive, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected depending on needs. For example, the electrolyte may be in a liquid state, a gel state, or an all-solid state.

In some embodiments, the electrolyte is liquid and includes an electrolytic salt and a solvent.

In some embodiments, the electrolytic salt used in the lithium-ion secondary battery may include one or more of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, or lithium tetrafluoro oxalate phosphate. The electrolytic salt used in the sodium-ion secondary battery may include one or more of sodium hexafluorophosphate (NaPF₆), sodium tetrafluoroborate (NaBF₄), sodium hexafluoroarsenate (NaAsF₆), sodium trifluoroacetate (CF₃COONa), sodium trifluoromethanesulfonate (CF₃NaO₃S, NaOTf), or sodium tetraphenylborate (NaBPh₄).

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte solution further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not specifically limited to any particular type in this application, and may select any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or may be a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery includes a secondary battery cell, or includes a battery module and a battery pack.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

The secondary battery cell is not specifically limited to any particular shape in this application, and may be cylindrical, rectangular, or in any other shapes. For example, FIG. 2 shows a secondary battery cell 5 of a rectangular structure as an example.

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte solution wets the electrode assembly 52. The secondary battery cell 5 may include one or more electrode assemblies 52, and persons skilled in the art may make choices according to actual requirements.

In some embodiments, the secondary battery cell may be assembled into a battery module, and the battery module may include one or more secondary battery cells. The specific quantity may be chosen by persons skilled in the art based on use and capacity of the battery module.

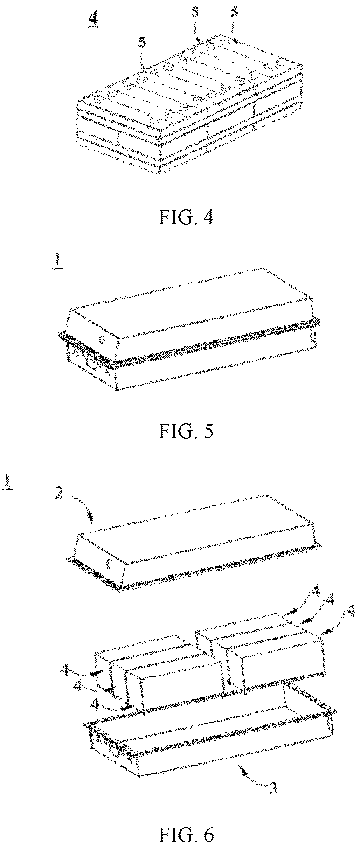

FIG. 4 shows a battery module 4 as an example. Refer to FIG. 4. In the battery module 4, a plurality of secondary battery cells 5 may be sequentially arranged in a length direction of the battery module 4. Certainly, the battery cells may alternatively be arranged in any other manner. Further, the plurality of secondary battery cells 5 may be fastened using fasteners.

Optionally, the battery module 4 may further include a shell with an accommodating space, and the plurality of secondary battery cells 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 may be engaged with the lower box body 3 to form an enclosed space for accommodating the battery modules 4. The plurality of battery modules 4 may be arranged in the battery box in any manner.

In addition, this application further provides an electric apparatus. The electric apparatus includes the secondary battery provided in this application. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery cell, the battery module, or the battery pack may be selected for the electric apparatus based on requirements for using the electric apparatus.

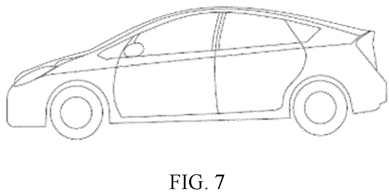

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used to explain this application, and cannot be construed as limitations on this application. Examples whose techniques or conditions are not specified are made in accordance with techniques or conditions described in literature in the field, or made in accordance with product instructions. The reagents or instruments used are all conventional products that are commercially available if no manufacturer is indicated.

The preparation process of the first adhesive (the structural unit B being 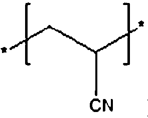 ) was as follows:

At a working temperature of 20°C, 5.4 g of a reactive surfactant containing double-bonded dialkyl sulfosuccinate salt M-30S was dissolved in 62 g of deionized water, and monomer A CH₂=CHCOOH, monomer B CH₂=CHCN, monomer C CH₂=CHCOO(CH₂)ₘ₁CH₃, and monomer D CH₂=CHCOO(CH₂)ₙ₁OH, and 0.058 g of chain transfer agent n-dodecyl mercaptan were sequentially added, blended evenly at a speed of 350 rpm for 25 min, with nitrogen introduced for protection at a flow rate of 110 mL/min during the process, to form a pre-emulsion. The pre-emulsion was heated to 85°C at a rate of 2°C/min and kept warm for 30 min to obtain the pre-emulsion. 3.8 g of reactive surfactant containing double-bonded dialkyl sulfosuccinate salt M-30S was dissolved in 61.3 g of deionized water, and the resulting mixed solution was added to a reactor, stirred at a speed of 300 rpm, with nitrogen introduced for deoxygenation protection at a flow rate of 100 mL/min, heated to 88°C at a rate of 2°C/min, and kept warm for 30 min to obtain a reactive surfactant solution. A 3.5 g ammonium persulfate solution was prepared with deionized water as a first initiator solution. The pre-emulsion and the first initiator solution were simultaneously and continuously added dropwise to the reactive surfactant solution in the reactor, with the addition completed in 160 min, and kept warm for 0.5 h to obtain a seed solution. A 1.0 g ammonium persulfate initiator solution was prepared with deionized water as a second initiator solution. The second initiator solution was added dropwise to the seed solution, with continuous addition for 120 min. After the addition was complete, the mixture was kept warm for 2 h to obtain an acrylic (ester) copolymer solution. The acrylic (ester) copolymer in the reactor was cooled to 65°C at a rate of 2°C/min, kept warm for 30 min, naturally cooled to room temperature, subjected to vacuum degassing, with the vacuum degree in the reactor below 0.09 MPa, maintained for 30 min, then vented to atmospheric pressure, and filtered through a 300-mesh filter cloth to obtain a second adhesive emulsion with a solid content of 50%. The pH value was then adjusted to 7 to 8. The solid content of the first adhesive was 15%.

By adjusting the constituents or amount of each monomer, the constituents of the first adhesive was adjusted, and the constituents of the obtained first adhesives 1 to 21 were recorded in Table 1-1.

The preparation process of the first adhesive 22 (the structural unit B being 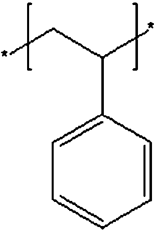 ) was as follows:

At a working temperature of 20°C, 5.4 g of a reactive surfactant containing double-bonded dialkyl sulfosuccinate salt M-30S was dissolved in 62 g of deionized water, and monomer A CH₂=CHCOOH, monomer B styrene, monomer C CH₂=CHCOO(CH₂)ₘ₁CH₃, and monomer D CH₂=CHCOO(CH₂)ₙ₁OH, and 0.058 g of chain transfer agent n-dodecyl mercaptan were sequentially added, blended evenly at a speed of 350 rpm for 25 min, with nitrogen introduced for protection at a flow rate of 110 mL/min during the process, to form a pre-emulsion. The pre-emulsion was heated to 85°C at a rate of 2°C/min and kept warm for 30 min to obtain the pre-emulsion. 3.8 g of reactive surfactant containing double-bonded dialkyl sulfosuccinate salt M-30S was dissolved in 61.3 g of deionized water, and the resulting mixed solution was added to a reactor, stirred at a speed of 300 rpm, with nitrogen introduced for deoxygenation protection at a flow rate of 100 mL/min, heated to 88°C at a rate of 2°C/min, and kept warm for 30 min to obtain a reactive surfactant solution. A 3.5 g ammonium persulfate solution was prepared with deionized water as a first initiator solution. The pre-emulsion and the first initiator solution were simultaneously and continuously added dropwise to the reactive surfactant solution in the reactor, with the addition completed in 160 min, and kept warm for 0.5 h to obtain a seed solution. A 1.0 g ammonium persulfate initiator solution was prepared with deionized water as a second initiator solution. The second initiator solution was added dropwise to the seed solution, with continuous addition for 120 min. After the addition was complete, the mixture was kept warm for 2 h to obtain an acrylic (ester) copolymer solution. The acrylic (ester) copolymer in the reactor was cooled to 65°C at a rate of 2°C/min, kept warm for 30 min, naturally cooled to room temperature, subjected to vacuum degassing, with the vacuum degree in the reactor below 0.09 MPa, maintained for 30 min, then vented to atmospheric pressure, and filtered through a 300-mesh filter cloth to obtain a second adhesive emulsion with a solid content of 50%. The pH value was then adjusted to 7 to 8. The solid content of the first adhesive was 15%.

The preparation process of the first adhesive 23 (the structural unit B being 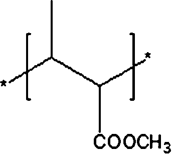 ) was as follows:

At a working temperature of 20°C, 5.4 g of a reactive surfactant containing double-bonded dialkyl sulfosuccinate salt M-30S was dissolved in 62 g of deionized water, and monomer A CH₂=CHCOOH, monomer B methyl methacrylate, monomer C CH₂=CHCOO(CH₂)ₘ₁CH₃, and monomer D CH₂=CHCOO(CH₂)ₙ₁OH, and 0.058 g of chain transfer agent n-dodecyl mercaptan were sequentially added, blended evenly at a speed of 350 rpm for 25 min, with nitrogen introduced for protection at a flow rate of 110 mL/min during the process, to form a pre-emulsion. The pre-emulsion was heated to 85°C at a rate of 2°C/min and kept warm for 30 min to obtain the pre-emulsion. 3.8 g of reactive surfactant containing double-bonded dialkyl sulfosuccinate salt M-30S was dissolved in 61.3 g of deionized water, and the resulting mixed solution was added to a reactor, stirred at a speed of 300 rpm, with nitrogen introduced for deoxygenation protection at a flow rate of 100 mL/min, heated to 88°C at a rate of 2°C/min, and kept warm for 30 min to obtain a reactive surfactant solution. A 3.5 g ammonium persulfate solution was prepared with deionized water as a first initiator solution. The pre-emulsion and the first initiator solution were simultaneously and continuously added dropwise to the reactive surfactant solution in the reactor, with the addition completed in 160 min, and kept warm for 0.5 h to obtain a seed solution. A 1.0 g ammonium persulfate initiator solution was prepared with deionized water as a second initiator solution. The second initiator solution was added dropwise to the seed solution, with continuous addition for 120 min. After the addition was complete, the mixture was kept warm for 2 h to obtain an acrylic (ester) copolymer solution. The acrylic (ester) copolymer in the reactor was cooled to 65°C at a rate of 2°C/min, kept warm for 30 min, naturally cooled to room temperature, subjected to vacuum degassing, with the vacuum degree in the reactor below 0.09 MPa, maintained for 30 min, then vented to atmospheric pressure, and filtered through a 300-mesh filter cloth to obtain a second adhesive emulsion with a solid content of 50%. The pH value was then adjusted to 7 to 8. The solid content of the first adhesive was 15%.

The preparation process of the first adhesive 24 (the structural unit C being lauryl methacrylate CH₃CH₂=CHCOO(CH₂)₁₂CH₃) was as follows:
At a working temperature of 20°C, 5.4 g of a reactive surfactant containing double-bonded dialkyl sulfosuccinate salt M-30S was dissolved in 62 g of deionized water, and monomer A CH₂=CHCOOH, monomer B CH₂=CHCN, monomer C CH₃CH₂=CHCOO(CH₂)₁₂CH₃, and monomer D CH₂=CHCOO(CH₂)ₙ₁OH, and 0.058 g of chain transfer agent n-dodecyl mercaptan were sequentially added, blended evenly at a speed of 350 rpm for 25 min, with nitrogen introduced for protection at a flow rate of 110 mL/min during the process, to form a pre-emulsion. The pre-emulsion was heated to 85°C at a rate of 2°C/min and kept warm for 30 min to obtain the pre-emulsion. 3.8 g of reactive surfactant containing double-bonded dialkyl sulfosuccinate salt M-30S was dissolved in 61.3 g of deionized water, and the resulting mixed solution was added to a reactor, stirred at a speed of 300 rpm, with nitrogen introduced for deoxygenation protection at a flow rate of 100 mL/min, heated to 88°C at a rate of 2°C/min, and kept warm for 30 min to obtain a reactive surfactant solution. A 3.5 g ammonium persulfate solution was prepared with deionized water as a first initiator solution. The pre-emulsion and the first initiator solution were simultaneously and continuously added dropwise to the reactive surfactant solution in the reactor, with the addition completed in 160 min, and kept warm for 0.5 h to obtain a seed solution. A 1.0 g ammonium persulfate initiator solution was prepared with deionized water as a second initiator solution. The second initiator solution was added dropwise to the seed solution, with continuous addition for 120 min. After the addition was complete, the mixture was kept warm for 2 h to obtain an acrylic (ester) copolymer solution. The acrylic (ester) copolymer in the reactor was cooled to 65°C at a rate of 2°C/min, kept warm for 30 min, naturally cooled to room temperature, subjected to vacuum degassing, with the vacuum degree in the reactor below 0.09 MPa, maintained for 30 min, then vented to atmospheric pressure, and filtered through a 300-mesh filter cloth to obtain a second adhesive emulsion with a solid content of 50%. The pH value was then adjusted to 7 to 8. The solid content of the first adhesive was 15%.

**Table 1-1**

| | Molar content of structural monomer A (%) | Molar content of structural monomer B (%) | m1 | Molar content of structural monomer C (%) | n1 | Molar content of structural monomer D (%) | Weight-average molecular weight (10,000) |
|---|---|---|---|---|---|---|---|
| First adhesive 1 | 10 | 40 | 2 | 40 | 3 | 10 | 80 |
| First adhesive 2 | 5 | 40 | 2 | 40 | 3 | 15 | 80 |
| First adhesive 3 | 30 | 30 | 2 | 30 | 3 | 10 | 80 |
| First adhesive 4 | 5 | 5 | 2 | 85 | 3 | 5 | 80 |
| First adhesive 5 | 5 | 85 | 2 | 5 | 3 | 5 | 80 |
| First adhesive 6 | 10 | 20 | 2 | 60 | 3 | 10 | 80 |
| First adhesive 7 | 10 | 30 | 2 | 50 | 3 | 10 | 80 |
| First adhesive 8 | 10 | 55 | 2 | 25 | 3 | 10 | 80 |
| First adhesive 9 | 10 | 45 | 2 | 35 | 3 | 10 | 80 |
| First adhesive 10 | 2 | 90 | 2 | 5 | 3 | 3 | 80 |
| First adhesive 11 | 2 | 5 | 2 | 90 | 3 | 3 | 80 |
| First adhesive 12 | 10 | 40 | 2 | 40 | 3 | 10 | 5 |
| First adhesive 13 | 10 | 40 | 2 | 40 | 3 | 10 | 10 |
| First adhesive 14 | 10 | 40 | 2 | 40 | 3 | 10 | 50 |
| First adhesive 15 | 10 | 40 | 2 | 40 | 3 | 10 | 100 |
| First adhesive 16 | 10 | 40 | 2 | 40 | 3 | 10 | 150 |
| First adhesive 17 | 10 | 40 | 2 | 40 | 3 | 10 | 170 |
| First adhesive 18 | 10 | 40 | 6 | 40 | 2 | 10 | 80 |
| First adhesive 19 | 10 | 40 | 2 | 40 | 6 | 10 | 80 |
| First adhesive 20 | 10 | 40 | 12 | 40 | 3 | 10 | 80 |
| First adhesive 21 | 10 | 40 | 15 | 40 | 3 | 10 | 80 |
| First adhesive 22 | 10 | 40 | 2 | 40 | 3 | 10 | 80 |
| First adhesive 23 | 10 | 40 | 2 | 40 | 3 | 10 | 80 |
| First adhesive 24 | 10 | 40 | m2=1 2 | 40 | 3 | 10 | 80 |

The molecular weights in Table 1-1 are weight-average molecular weights rounded to the nearest ten thousand, tested according to the standard GB/T 21863-2008 using an ultra-high performance polymer chromatograph.

The preparation process of the second adhesive was as follows:
At a working temperature of 20°C, 4.2 g (4.2%) of a reactive surfactant containing double-bonded dialkyl sulfosuccinate salt M-30S was dissolved in 58 g (116%) of deionized water, and monomer A CH₂=CHCOOH, monomer C CH₂=CHCOO(CH₂)ₘ₁CH₃, monomer D CH₂=CHCOO(CH₂)ₙ₁OH, and 0.048 g (0.096%) of chain transfer agent n-dodecyl mercaptan were sequentially added, blended evenly at a speed of 300 rpm for 30 min, with nitrogen introduced for deoxygenation protection at a flow rate of 100 mL/min during the process, to form a pre-emulsion. The pre-emulsion was heated to 85°C at a rate of 2°C/min and kept warm for 30 min to obtain the pre-emulsion. 2.8 g (2.8%) of reactive surfactant containing double-bonded dialkyl sulfosuccinate salt M-30S was dissolved in 51.3 g (102.6%) of deionized water, and the resulting mixed solution was added to a reactor, stirred at a speed of 300 rpm, with nitrogen introduced for deoxygenation protection at a flow rate of 100 mL/min, heated to 86°C at a rate of 2°C/min, and kept warm for 30 min to obtain a reactive surfactant solution. A 3 g (0.15wt%) ammonium persulfate solution was prepared with deionized water as a first initiator solution. The pre-emulsion and the first initiator solution were simultaneously and continuously added dropwise to the reactive surfactant solution in the reactor, with the addition completed in 150 min, and kept warm for 0.5 h to obtain an acrylic (ester) copolymer seed solution. A 1.0 g (0.1wt%) ammonium persulfate initiator solution was prepared with deionized water as a second initiator solution. The second initiator solution was added dropwise to the acrylic (ester) copolymer seed solution, with continuous addition for 120 min. After the addition was complete, the mixture was kept warm for 2 h to obtain an acrylic (ester) copolymer solution. The acrylic (ester) copolymer in the reactor was cooled to 65°C at a rate of 2°C/min, kept warm for 30 min, naturally cooled to room temperature, subjected to vacuum degassing, with the vacuum degree in the reactor below 0.09 MPa, maintained for 30 min, then vented to atmospheric pressure, and filtered through a 300-mesh filter cloth to obtain a second adhesive emulsion with a solid content of 50%. The pH value was then adjusted to 7 to 8.

By adjusting the constituents and amount of each monomer, the constituent of the second adhesive was adjusted, and the constituent s of the obtained second adhesives 1 to 12 were recorded in Table 1-2.

**Table 1-2**

| | Molar content of structural monomer A (%) | m1 | Molar content of structural monomer C (%) | n1 | Molar content of structural monomer D (%) | Weight-average molecular weight (10,000) |
|---|---|---|---|---|---|---|
| Second adhesive 1 | 5 | 2 | 80 | 3 | 15 | 90 |
| Second adhesive 2 | 10 | 2 | 80 | 3 | 10 | 90 |
| Second adhesive 3 | 10 | 2 | 85 | 3 | 5 | 90 |
| Second adhesive 4 | 10 | 2 | 70 | 3 | 20 | 90 |
| Second adhesive 5 | 10 | 2 | 60 | 3 | 30 | 90 |
| Second adhesive 6 | 5 | 2 | 90 | 3 | 5 | 90 |
| Second adhesive 7 | 5 | 2 | 80 | 3 | 15 | 60 |
| Second adhesive 8 | 5 | 2 | 80 | 3 | 15 | 80 |
| Second Adhesive 9 | 5 | 2 | 80 | 3 | 15 | 230 |
| Second adhesive 10 | 5 | 6 | 80 | 1 | 15 | 90 |
| Second adhesive 11 | 5 | 2 | 80 | 6 | 15 | 90 |
| Second adhesive 12 | 5 | 12 | 80 | 7 | 15 | 90 |

The molecular weights in Table 1-2 are weight-average molecular weights rounded to the nearest ten thousand, tested according to the standard GB/T 21863-2008 using an ultra-high performance polymer chromatograph.

### Example 1

A dispersant was added to deionized water, dispersed and stirred at 300 rpm for 15 min to obtain a first dispersion solution.

An insulating filler was added to the foregoing first dispersion solution, dispersed and stirred at 1500 rpm for 75 min to obtain a second dispersion solution.

A first adhesive emulsion was added to the foregoing second dispersion solution, dispersed and stirred at 1500 rpm for 60 min to obtain a third dispersion solution.

A second adhesive emulsion was added to the foregoing third dispersion solution, dispersed and stirred at 500 rpm for 60 min to obtain a glue solution. The specific substances and amounts used for the dispersant, insulating filler, first adhesive, and second adhesive were recorded in Table 2.

### Examples 2 to 47

Corresponding glue solutions were prepared following the process of Example 1, with the specific substances and amounts used for the dispersant, insulating filler, first adhesive (dry substance), and second adhesive (dry substance) in each example recorded in Table 2.

### Comparative Example 1

A dispersant was added to deionized water, dispersed and stirred at 300 rpm for 15 min to obtain a first dispersion solution.

An insulating filler was added to the foregoing first dispersion solution, dispersed and stirred at 1500 rpm for 75 min to obtain a second dispersion solution.

A first adhesive emulsion was added to the foregoing dispersion solution, dispersed and stirred at 1500 rpm for 60 min to obtain a glue solution. The specific substances and amounts used for the dispersant, insulating filler, and first adhesive were recorded in Table 2.

### Comparative Example 2

A dispersant was added to deionized water, dispersed and stirred at 300 rpm for 15 min to obtain a first dispersion solution.

An insulating filler was added to the foregoing first dispersion solution, dispersed and stirred at 1500 rpm for 75 min to obtain a second dispersion solution.

A second adhesive emulsion was added to the foregoing second dispersion solution, dispersed and stirred at 1500 rpm for 60 min to obtain a glue solution.

The specific substances and amounts used for the dispersant, insulating filler, and second adhesive were recorded in Table 2.

The dispersants used in the examples and comparative examples were Chemadd-6004 from Yueyang Kaimen Water-Based Additives Co., Ltd., with a mass of 0.4 parts.

**Table 2**

| | First binder | Second binder | Mass ratio of first adhesive to second adhesive | Molar content of structural units in adhesive composition (%) | | | | Molar ratio of structural units | | Adhesive | Insulating filler | Insulating filler and Dv50 particle size | Solid content of glue solution |
|---|---|---|---|---|---|---|---|---|---|---|---|---|---|
| | | | | A | B | C | D | D/A | C/B | Weight parts | Weight parts | µm | (%) |
| Example 1 | 1 | 1 | | 5.27 | 2.16 | 77.84 | 14.73 | 2.79 | 36.00 | | | | 32.2 |
| Example 2 | 2 | 1 | | 5.00 | 2.16 | 77.84 | 15.00 | 3.00 | 36.00 | | | | 32.1 |
| Example 3 | 3 | 1 | | 6.35 | 1.62 | 77.30 | 14.73 | 2.32 | 47.67 | | | | 32.3 |
| Example 4 | 4 | 1 | | 5.00 | 0.27 | 80.27 | 14.46 | 2.89 | 297.00 | | | | 32.5 |
| Example 5 | 5 | 1 | | 5.00 | 4.59 | 75.95 | 14.46 | 2.89 | 16.53 | | | | 32 |
| Example 6 | 6 | 1 | | 5.27 | 1.08 | 78.92 | 14.73 | 2.79 | 73.00 | | | | 31.8 |
| Example 7 | 7 | 1 | | 5.27 | 1.62 | 78.38 | 14.73 | 2.79 | 48.33 | | | | 31.9 |
| Example 8 | 8 | 1 | | 5.27 | 2.97 | 77.03 | 14.73 | 2.79 | 25.91 | | | | 32 |
| Example 9 | 9 | 1 | | 5.27 | 2.43 | 77.57 | 14.73 | 2.79 | 31.89 | | | | 32 |
| Example 10 | 10 | 1 | | 4.84 | 4.86 | 75.95 | 14.35 | 2.97 | 15.61 | | | | 31.9 |
| Example 11 | 11 | 1 | 1:17.5 | 4.84 | 0.27 | 80.54 | 14.35 | 2.97 | 298.00 | 18.5 | 80.3 | Boehmite, ≤1 µm | 31.9 |
| Example 12 | 12 | 1 | | 5.27 | 2.16 | 77.84 | 14.73 | 2.79 | 36.00 | | | | 31.8 |
| Example 13 | 13 | 1 | | 5.27 | 2.16 | 77.84 | 14.73 | 2.79 | 36.00 | | | | 31.9 |
| Example 14 | 14 | 1 | | 5.27 | 2.16 | 77.84 | 14.73 | 2.79 | 36.00 | | | | 32.8 |
| Example 15 | 15 | 1 | | 5.27 | 2.16 | 77.84 | 14.73 | 2.79 | 36.00 | | | | 32.8 |
| Example 16 | 16 | 1 | | 5.27 | 2.16 | 77.84 | 14.73 | 2.79 | 36.00 | | | | 32.5 |
| Example 17 | 17 | 1 | | 5.27 | 2.16 | 77.84 | 14.73 | 2.79 | 36.00 | | | | 32.5 |
| Example 18 | 18 | 1 | | 5.27 | 2.16 | 77.84 | 14.73 | 2.79 | 36.00 | | | | 32.1 |
| Example 19 | 19 | 1 | | 5.27 | 2.16 | 77.84 | 14.73 | 2.79 | 36.00 | | | | 32.3 |
| Example 20 | 20 | 1 | | 5.27 | 2.16 | 77.84 | 14.73 | 2.79 | 36.00 | | | | 32.2 |
| Example 21 | 21 | 1 | | 10.00 | 2.16 | 77.84 | 10.00 | 1.00 | 36.00 | | | | 32 |
| Example 22 | 1 | 2 | | 10.00 | 2.16 | 82.57 | 5.27 | 0.53 | 38.19 | | | | 32.4 |
| Example 23 | 1 | 3 | | 10.00 | 2.16 | 68.38 | 19.46 | 1.95 | 31.63 | | | | 32.7 |
| Example 24 | 1 | 4 | | 10.00 | 2.16 | 58.92 | 28.92 | 2.89 | 27.25 | | | | 31.9 |
| Example 25 | 1 | 5 | | 5.27 | 2.16 | 87.30 | 5.27 | 1.00 | 40.38 | | | | 32 |
| Example 26 | 1 | 6 | | 5.27 | 2.16 | 77.84 | 14.73 | 2.79 | 36.00 | | | | 32.2 |
| Example 27 | 1 | 7 | | 5.27 | 2.16 | 77.84 | 14.73 | 2.79 | 36.00 | | | | 32.3 |
| Example 28 | 1 | 8 | | 5.27 | 2.16 | 77.84 | 14.73 | 2.79 | 36.00 | | | | 32.1 |
| Example 29 | 1 | 9 | | 5.27 | 2.16 | 77.84 | 14.73 | 2.79 | 36.00 | | | | 32.2 |
| Example 30 | 1 | 10 | | 5.27 | 2.16 | 77.84 | 14.73 | 2.79 | 36.00 | | | | 31.8 |
| Example 31 | 1 | 11 | | 5.27 | 2.16 | 77.84 | 14.73 | 2.79 | 36.00 | | | | 31.9 |
| Example 32 | 1 | 12 | | 5.00 | 2.05 | 73.85 | 14.49 | 2.90 | 36.00 | | | | 32.2 |
| Example 33 | 1 | 1 | 2:17.5 | 4.53 | 1.86 | 66.98 | 14.07 | 3.10 | 36.00 | 19.5 | 79.3 | | 32.4 |
| Example 34 | 1 | 1 | 4:17.5 | 5.83 | 6.67 | 73.33 | 14.17 | 2.43 | 11.00 | 21.5 | 77.3 | | 32.2 |
| Example 35 | 1 | 1 | 1:5 | 5.00 | 2.76 | 71.72 | 14.31 | 2.86 | 26.00 | 12 | 86.8 | | 32.1 |
| Example 36 | 1 | 1 | 2:12.5 | 5.00 | 2.35 | 72.94 | 14.41 | 2.88 | 31.00 | 14.5 | 84.3 | | 32.4 |
| Example 37 | 1 | 1 | 2:15 | 5.45 | 3.64 | 76.36 | 14.55 | 2.67 | 21.00 | 17 | 81.8 | | 32.5 |
| Example 38 | 1 | 1 | 1:10 | 6.43 | 11.43 | 68.57 | 13.57 | 2.11 | 6.00 | 22 | 76.8 | | 32.1 |
| Example 39 | 1 | 1 | 1:2.5 | 5.24 | 1.90 | 78.10 | 14.76 | 2.82 | 41.00 | 25 | 70 | | 32.6 |
| Example 40 | 1 | 1 | 1:20 | 6.67 | 13.33 | 66.67 | 13.33 | 2.00 | 5.00 | 10 | 90 | | 32.1 |
| Example 41 | 1 | 1 | 1:2 | 5.19 | 1.54 | 78.46 | 14.81 | 2.85 | 51.00 | 12 | 86.8 | | 31.9 |
| Example 42 | 1 | 1 | 1:25 | 6.43 | 11.43 | 68.57 | 13.57 | 2.11 | 6.00 | 12 | 86.8 | | 31.8 |
| Example 43 | 1 | 1 | 1:2.5 | 6.43 | 11.43 | 68.57 | 13.57 | 2.11 | 6.00 | 8 | 70 | | 32.2 |
| Example 44 | 1 | 1 | 1:2.5 | 5.27 | 2.16 | 77.84 | 14.73 | 2.79 | 36.00 | 30 | 70 | | 32 |
| Example 45 | 1 | 1 | 1:17.5 | 5.27 | 2.16 | 77.84 | 14.73 | 2.79 | 36.00 | 18.5 | 80.3 | Boehmite, <2 µm | 32 |
| Example 46 | 1 | 1 | 1:17.5 | 5.27 | 2.16 | 77.84 | 14.73 | 2.79 | 36.00 | 18.5 | 80.3 | Silicon dioxide, <1 µm | 32.1 |
| Example 47 | 22 | 1 | 1:17.5 | 5.27 | 2.16 | 77.84 | 14.73 | 2.79 | 36.00 | 18.5 | 80.3 | Boehmite, <1 µm | 32.1 |
| Example 48 | 23 | 1 | 1:17.5 | 5.27 | 2.16 | 77.84 | 14.73 | 2.79 | 36.00 | 18.5 | 80.3 | Boehmite, <1 µm | 32.3 |
| Example 49 | 24 | 1 | 1:17.5 | 5.27 | 2.16 | 77.84 | 14.73 | 2.79 | 36.00 | 18.5 | 80.3 | Boehmite, <1 µm | 32.4 |
| Comparative Example 1 | 1 | None | - | - | - | - | - | - | - | 10 | 88.8 | Boehmite, <1 µm | 32 |
| Comparative Example 2 | None | 1 | - | - | - | - | - | - | - | 10 | 88.8 | Boehmite, <1 µm | 31.9 |

Viscosity test: The rotational viscosity of the glue solution was tested at 25°C and 12 rpm, with the results recorded in Table 3.

Wear resistance test: Each glue solution was applied onto a 13 µm aluminum foil using a 5 µm scraper, transferred to a 100°C oven for drying, to prepare an insulating adhesive layer for testing.

RCA paper strip wear resistance tester (BGD 530, Biuged Laboratory Instruments (Guangzhou) Co., Ltd.); Test principle: A motor drove the paper strip to pass uniformly over a region of the test sample surface, and a certain pressure was applied to wear the test surface. Test method: For a 5 µm thick insulating adhesive layer to be tested, a 55 g weight and a flat tape traveling 300 mm (2 cycles) were used, and the number of non-leaking points in the test region (10 points tested in total) was recorded in Table 3, along with the area of leaking points, to calculate the proportion of the non-leaking point area to the total area of the test region.

Evaluation criteria: Under the same pressure, the longer the paper strip travels without exposing the aluminum foil, the more wear-resistant it is; or under the same paper strip travel length, the greater the number of non-leaking points of the aluminum foil tested, the more wear-resistant it is.

### Cohesion test:

A slurry was prepared from the adhesion substance and applied onto a carbon-coated layer of a carbon-coated copper foil, followed by drying to obtain a sample piece, one side of the sample piece being a copper foil surface and the other side being an adhesive layer formed by the adhesion substance; the sample piece was then cut into strips with a width of 2 cm and a length of 6 cm; the copper foil surface of the strip was bonded to a surface of a hard substrate (steel plate) using 3M-55230H double-sided tape (ensuring no bubbles during bonding). The adhesive layer surface of the fixed strip was bonded with 3M-55230H double-sided tape, and a copper foil of the same size as the double-sided tape was covered on the surface of the double-sided tape (ensuring no bubbles during bonding), with the double-sided tape used in two bonding processes being of the same size, to obtain a test sample.

The copper foil and double-sided tape at the first end of the test sample were manually peeled in a 180° direction for a certain distance, and extended backward beyond the end (that is, a second end) opposite the first end of the entire test sample by 1 cm. One end of a tensile testing machine was used to fix the first end (hard substrate, carbon-coated copper foil, adhesive layer); the other end of the tensile testing machine was used to fix the second end.

A stretching speed of the tensile testing machine was set to 50 mm/min, a stretching length was set to 100 mm, and then the test was conducted. The peel force data obtained during the test was the cohesion of a coating material. The results were recorded in Table 3.

Hardness test: A Shore type-A hardness tester was used to test the hardness of the surface of the insulating adhesive layer. The results were recorded in Table 3.

### Adhesive force test

Each glue solution was applied onto a 13 µm aluminum foil using a 5 µm scraper, transferred to a 100°C oven for drying, to prepare an insulating adhesive layer for testing.

A sample with an insulating adhesive layer was cut from the foregoing insulating adhesive layer using a blade, with a width of 20 mm and a length of 100 mm to 160 mm. A special double-sided tape NITTO.NO5000NS was attached to a steel plate, with a tape width of 20 mm and a tape length of 90 mm to 150 mm; a paper strip with the same width as the sample and a length of 80 mm to 200 mm longer than the sample was fixed on the double-sided tape, and crepe tape was placed on the paper strip; the cut sample of fixed size was attached to the crepe tape with the insulating adhesive layer facing downward, and a 3 kg pressure roller was used to roll the sample surface in the same direction three times to obtain a test sample. The test sample was fixed on a testing machine, with the end of the steel plate not attached to the electrode plate fixed by a lower clamp, and the paper strip folded upward and fixed by an upper clamp, ensuring the sample axis direction was consistent with the force application direction. The testing machine was loaded at a peeling speed of 10 mm/min until the sample fractured, the test was stopped, and the maximum load force was recorded as F (in N). The sample width was L=20 mm, and the peel strength f1 (in N/m) was calculated according to f1=F/L, where the peel strength was the adhesive force. The results were recorded in Table 3.

Heat resistance test: Thermogravimetric analysis was carried out on the test coating sample using the TG-DSC technology, and the thermal decomposition temperature was recorded in Table 3.

**Table 3**

| | Viscosity (mPa·s) | Non-leaking points (tested 10 points) | Adhesive force (N/m) | Thermal decomposition temperature (°C) | Cohesion (N/m) | Hardness (HA) |
|---|---|---|---|---|---|---|
| Example 1 | 510 | 9 | 67 | 411 | 706 | 60 |
| Example 2 | 500 | 9 | 66 | 412 | 717 | 57 |
| Example 3 | 520 | 9 | 60 | 405 | 720 | 62 |
| Example 4 | 490 | 7 | 79 | 405 | 687 | 43 |
| Example 5 | 515 | 7 | 10 | 407 | 679 | 63 |
| Example 6 | 522 | 6 | 70 | 410 | 704 | 48 |
| Example 7 | 517 | 7 | 69 | 411 | 705 | 52 |
| Example 8 | 521 | 8 | 48 | 412 | 704 | 69 |
| Example 9 | 506 | 9 | 55 | 406 | 708 | 59 |
| Example 10 | 509 | 3 | 28 | 398 | 632 | 75 |
| Example 11 | 525 | 3 | 89 | 400 | 627 | 46 |
| Example 12 | 200 | 3 | 62 | 401 | 667 | 53 |
| Example 13 | 320 | 7 | 67 | 399 | 683 | 59 |
| Example 14 | 410 | 8 | 71 | 401 | 685 | 64 |
| Example 15 | 610 | 9 | 77 | 389 | 715 | 72 |
| Example 16 | 804 | 9 | 80 | 401 | 725 | 74 |
| Example 17 | 920 | 10 | 82 | 402 | 744 | 79 |
| Example 18 | 453 | 8 | 64 | 398 | 703 | 61 |
| Example 19 | 457 | 8 | 65 | 401 | 706 | 62 |
| Example 20 | 463 | 9 | 67 | 415 | 705 | 60 |
| Example 21 | 445 | 7 | 61 | 386 | 710 | 59 |
| Example 22 | 512 | 9 | 88 | 403 | 707 | 61 |
| Example 23 | 512 | 7 | 67 | 400 | 703 | 55 |
| Example 24 | 507 | 10 | 72 | 406 | 731 | 65 |
| Example 25 | 508 | 8 | 63 | 405 | 749 | 67 |
| Example 26 | 611 | 7 | 80 | 410 | 678 | 56 |
| Example 27 | 500 | 9 | 78 | 411 | 687 | 57 |
| Example 28 | 511 | 9 | 70 | 421 | 687 | 58 |
| Example 29 | 705 | 9 | 69 | 411 | 727 | 68 |
| Example 30 | 447 | 7 | 59 | 401 | 697 | 58 |
| Example 31 | 441 | 6 | 53 | 387 | 693 | 59 |
| Example 32 | 521 | 9 | 69 | 413 | 701 | 59 |
| Example 33 | 499 | 9 | 67 | 410 | 702 | 60 |
| Example 34 | 967 | 10 | 58 | 420 | 711 | 65 |
| Example 35 | 612 | 6 | 55 | 415 | 715 | 67 |
| Example 36 | 605 | 7 | 54 | 417 | 723 | 53 |
| Example 37 | 560 | 8 | 63 | 408 | 707 | 51 |
| Example 38 | 489 | 8 | 77 | 402 | 719 | 55 |
| Example 39 | 712 | 9 | 32 | 419 | 677 | 68 |
| Example 40 | 457 | 7 | 83 | 388 | 665 | 49 |
| Example 41 | 776 | 9 | 43 | 410 | 645 | 69 |
| Example 42 | 398 | 3 | 90 | 378 | 658 | 50 |
| Example 43 | 489 | 6 | 37 | 416 | 698 | 70 |
| Example 44 | 488 | 6 | 39 | 416 | 701 | 69 |
| Example 45 | 522 | 8 | 61 | 416 | 679 | 56 |
| Example 46 | 511 | 9 | 62 | 412 | 677 | 55 |
| Example 47 | 512 | 9 | 65 | 416 | 669 | 57 |
| Example 48 | 505 | 9 | 66 | 415 | 671 | 63 |
| Example 49 | 518 | 9 | 69 | 418 | 667 | 65 |
| Comparative Example 1 | 1105 | 0 | 22 | 430 | 341 | 50 |
| Comparative Example 2 | 201 | 0 | 83 | 377 | 322 | 70 |

From the comparison of the examples and comparative examples, it can be learned that the wear resistance of the insulating adhesive layer formed by the adhesive composition of this application is significantly better than that when the first adhesive 1 or the second adhesive 1 is used alone. Moreover, when the viscosity of the first adhesive 1 is too high, it is not conducive to construction when used alone, resulting in too low adhesive force; and when the viscosity of the second adhesive 1 is too low, it affects application performance and thus the film-forming effect.

From the comparisons between Example 2 and Examples 4 and 5, and between Example 1 and Examples 6 to 9, it can be learned that when the content of the structural unit B in the first adhesive increased and the content of the structural unit C decrease, meaning that the content of the hard monomer structural unit in the first adhesive increases, the adhesive force of the corresponding adhesive composition decreases.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An adhesion substance comprising an adhesive, wherein the adhesive comprises structural unit A, structural unit B, structural unit C, and structural unit D, at least a portion of the structural unit A being crosslinked with at least a portion of the structural unit D;
wherein the structural unit A is 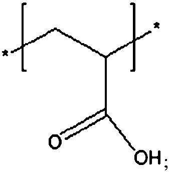
the structural unit B is independently selected from any one or more of 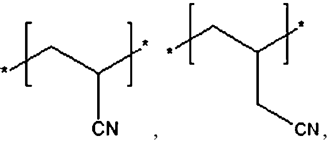 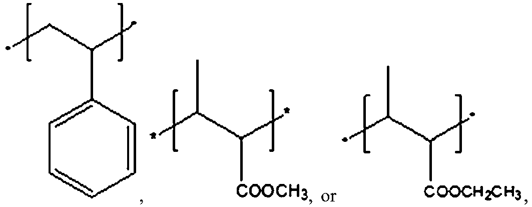 optionally, the structural unit B is 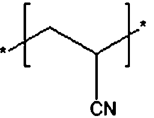 or 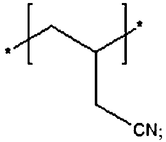
the structural unit C is independently selected from any one of 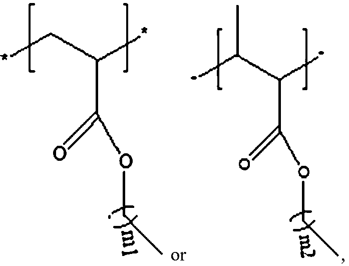 m1 and m2 being each independently an integer from 1 to 20, optionally, each m1 being independently an integer from 2 to 12, and each m2 being independently an integer from 8 to 12; and
the structural unit D is independently selected from any one or more of 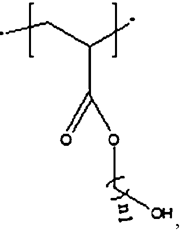
each n1 being independently an integer from 1 to 20, optionally, n1 being an integer from 1 to 12, further optionally n1 being an integer from 1 to 6.

2. The adhesion substance according to claim 1, wherein
at least a portion of the structural unit A, at least a portion of the structural unit B, at least a portion of the structural unit C, and at least a portion of the structural unit D are chain-linked forming a first chain structure,
at least a portion of the structural unit A, at least a portion of the structural unit C, and at least a portion of the structural unit D are chain-linked forming a second chain structure;
at least a portion of the structural unit A in the first chain structure is crosslinked with at least a portion of the structural unit D in the second chain structure; and
at least a portion of the structural unit D in the first chain structure is crosslinked with at least a portion of the structural unit A in the second chain structure.

3. The adhesion substance according to claim 1 or 2, wherein the adhesion substance meets any one or more of the following conditions:
(1) wear resistance of an insulating adhesive layer with a thickness of 3 µm to 7 µm formed by the adhesion substance meets the following requirements: testing using an RCA paper strip wear resistance tester, using a 55 g weight, making a flat tape move along a plane for a distance of 300 mm for 2 cycles to form a test region, taking n test points in the test region with spacings of not less than 2 cm, wherein a proportion of non-leaking points in the test region is 30% or more, and 5≤n≤100, or an area of non-leaking points in the test region is 60% or more of a total area of the test region;
(2) cohesion of the insulating adhesive layer formed by the adhesion substance is 620 N/m to 750 N/m, optionally 660 N/m to 725 N/m;
(3) Shore hardness of the insulating adhesive layer formed by the adhesion substance is 45 HA to 80 HA, optionally 50 HA to 65 HA; and
(4) adhesive force of the insulating adhesive layer formed by the adhesion substance is 30 N/m to 90 N/m, optionally 40 N/m to 80 N/m.

4. The adhesion substance according to any one of claims 1 to 3, wherein in the adhesive, a molar ratio of the structural unit D to the structural unit A is 0.5:1 to 5:1, optionally 0.5:1 to 3:1, further optionally 1:1 to 3:1; optionally, a molar content of the structural unit A is 4% to 50%, optionally 4% to 10%, and a molar content of the structural unit D is 1% to 50%, optionally 5% to 30%, further optionally 5% to 15%.

5. The adhesion substance according to any one of claims 1 to 4, wherein in the adhesive, a molar ratio of the structural unit C to the structural unit B is 1:1 to 300:1, optionally 5:1 to 50:1; optionally, a molar content of the structural unit B is 0.2% to 20%, optionally 1% to 5%; and optionally, a molar content of the structural unit C is 1% to 90%, optionally 55% to 90%, further optionally 75% to 80%.

6. The adhesion substance according to any one of claims 1 to 5, wherein the adhesion substance further comprises an insulating filler and/or a dispersant; optionally, a weight ratio of the insulating filler, the adhesive, and the dispersant is (70-90):(10-25):0.4.

7. The adhesion substance according to claim 6, wherein the insulating filler comprises any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder; optionally, a median particle size by volume Dv50 of the insulating filler being ≤1 µm.

8. The adhesion substance according to any one of claims 1 to 7, wherein the adhesion substance further comprises a solvent; optionally, a solid content of the adhesion substance is 20% to 40%; and
optionally, the solvent of the adhesion substance comprises water;
optionally, a viscosity of the adhesion substance measured at 25°C and 12 rpm is 350 mPa·s to 900 mPa·s.

9. An adhesive composition, comprising an adhesive, wherein the adhesive comprises a first adhesive and a second adhesive,
the first adhesive being a polymer and comprising structural unit A, structural unit B, structural unit C, and structural unit D,
the second adhesive being a polymer and comprising structural unit A, structural unit C, and structural unit D,
wherein the structural unit A is 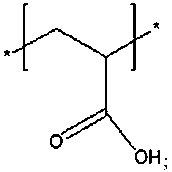
the structural unit B is independently selected from any one or more of 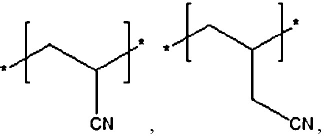 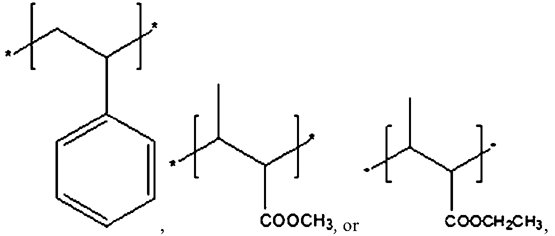 optionally, the structural unit B is 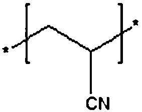 or 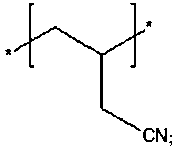
the structural unit C of the first adhesive and the structural unit C of the second adhesive are each independently selected from any one of 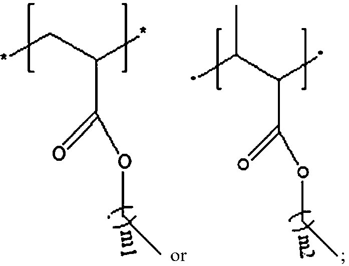
m1 and m2 being each independently an integer from 1 to 20; optionally, each m1 being independently an integer from 2 to 12, and each m2 being independently an integer from 8 to 12; and
the structural unit D of the first adhesive and the structural unit D of the second adhesive are each independently selected from 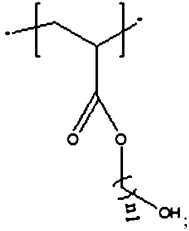 and
each n1 being independently an integer from 1 to 20, optionally each n1 being independently an integer from 1 to 12; further optionally each n1 being independently an integer from 1 to 6.

10. The adhesive composition according to claim 9, wherein a weight ratio of the first adhesive to the second adhesive is 1:2.5 to 1:20, optionally 1:5 to 1:17.5.

11. The adhesive composition according to claim 9 or 10, wherein the first adhesive meets any one or more of the following conditions:
(1) a molar content of the structural unit A in the first adhesive is 5% to 30%;
(2) a molar content of the structural unit B in the first adhesive is 5% to 85%;
(3) a molar content of the structural unit C in the first adhesive is 5% to 85%; and
(4) a molar content of the structural unit D in the first adhesive is 5% to 15%.

12. The adhesive composition according to any one of claims 9 to 11, wherein the second adhesive meets any one or more of the following conditions:
(1) a molar content of the structural unit A in the second adhesive is 5% to 10%;
(2) a molar content of the structural unit C in the second adhesive is 70% to 85%; and
(3) a molar content of the structural unit D in the second adhesive is 5% to 20%.

13. The adhesive composition according to any one of claims 9 to 12, wherein a weight-average molecular weight of the first adhesive is 500,000 to 1,500,000; further optionally, a difference in weight-average molecular weight between the first adhesive and the second adhesive is 100,000 to 1,500,000.

14. The adhesive composition according to any one of claims 9 to 13, wherein the adhesive composition further comprises an insulating filler and/or a dispersant; optionally, a weight ratio of the insulating filler, the adhesive, and the dispersant being (70-90):(10-25):0.4.

15. The adhesive composition according to claim 14, wherein the insulating filler comprises any one or more of aluminum oxide, magnesium oxide, silicon dioxide, titanium dioxide, barium titanate, aluminum nitride, silicon nitride, calcium hydroxide, magnesium hydroxide, aluminum hydroxide, mica, talc, boehmite, zeolite, apatite, kaolin, or glass powder; optionally, a median particle size by volume Dv50 of the insulating filler being ≤1 µm.

16. The adhesive composition according to claim 14 or 15, wherein the dispersant comprises one or more of polyacrylate compounds, fatty alcohol polyether compounds, or polyether-modified siloxane compounds.

17. The adhesive composition according to any one of claims 9 to 16, wherein the adhesive composition further comprises a solvent; optionally, a solid content of the adhesive composition being 20% to 40%; and further optionally, the solvent of the adhesive composition comprises water.

18. A positive electrode plate, comprising:
a positive electrode current collector (11), at least one side of the positive electrode current collector (11) having a positive electrode film layer region and an uncoated foil region;
a positive electrode film layer (12), disposed in the positive electrode film layer region of the positive electrode current collector (11); and
an insulating adhesive layer (13), disposed in the uncoated foil region of the positive electrode current collector (11), wherein the insulating adhesive layer (13) is formed by the adhesion substance according to any one of claims 1 to 8, or is cured from the adhesive composition according to any one of claims 9 to 17.

19. The positive electrode plate according to claim 18, wherein a thickness of the insulating adhesive layer (13) is less than or equal to a thickness of the positive electrode film layer (12), optionally, the thickness of the insulating adhesive layer (13) is 3 µm to 7 µm.

20. A preparation method of positive electrode plate, comprising a process of disposing a positive electrode film layer and an insulating adhesive layer on at least one side or two sides of a positive electrode current collector (11), wherein the process of disposing the insulating adhesive layer (13) comprises:
mixing constituents of the adhesion substance according to any one of claims 1 to 8 or the adhesive composition according to any one of claims 9 to 17 to form a glue solution;
applying the glue solution onto an uncoated foil region of the positive electrode current collector to obtain a preform with the glue solution; and
heating the preform with the glue solution to obtain the insulating adhesive layer, optionally, the heating temperature being 90°C to 120°C.

21. The preparation method according to claim 20, wherein the process of mixing constituents of the adhesive composition to form a slurry comprises:
mixing a dispersant in the adhesive composition with water to form a first dispersion solution, optionally, the mixing being a first stirring, a time of the first stirring being 5 min to 30 min, and a stirring speed being 200 rpm to 400 rpm;
mixing the first dispersion solution with an insulating filler in the adhesive composition to form a second dispersion solution, optionally, the mixing being a second stirring, a time of the second stirring being 30 min to 120 min, and a stirring speed being 1200 rpm to 1800 rpm;
mixing the second dispersion solution with a first adhesive in the adhesive composition to form a third dispersion solution, optionally, the mixing being a third stirring, a time of the third stirring being 15 min to 60 min, and a stirring speed being 400 rpm to 700 rpm; and
mixing the third dispersion solution with a second adhesive in the adhesive composition to form the glue solution, optionally, the mixing being a fourth stirring, a time of the fourth stirring being 5 min to 30 min, and a stirring speed being 200 rpm to 400 rpm.

22. A secondary battery, comprising a positive electrode plate, wherein the positive electrode plate comprises the positive electrode plate according to claim 18 or 19, or the positive electrode plate obtained by the preparation method according to claim 20 or 21.

23. An electric apparatus, comprising a secondary battery, wherein the secondary battery comprises the secondary battery according to claim 22.
